(19) Europäisches Patentamt

European Patent Office

Office européen des brevets

(11) **EP 3 511 567 B1**

(12) **EUROPEAN PATENT SPECIFICATION**

(45) Date of publication and mention
of the grant of the patent:
**16.06.2021 Bulletin 2021/24**

(21) Application number: **17848508.2**

(22) Date of filing: **08.08.2017**

(51) Int Cl.:
*F03D 17/00* *(2016.01)* *F03D 7/02* *(2006.01)*

(86) International application number:
**PCT/JP2017/028730**

(87) International publication number:
**WO 2018/047564 (15.03.2018 Gazette 2018/11)**

(54) **STATE MONITORING DEVICE, SYSTEM AND METHOD FOR WIND POWER GENERATING DEVICE**

ZUSTANDSÜBERWACHUNGSVORRICHTUNG, ZUSTANDSÜBERWACHUNGSSYSTEM UND VERFAHREN FÜR WINDKRAFTANLAGE

DISPOSITIF, SYSTÈME ET PROCÉDÉ DE SURVEILLANCE D'ÉTAT POUR ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.09.2016 JP 2016174258**

(43) Date of publication of application:
**17.07.2019 Bulletin 2019/29**

(73) Proprietor: **Hitachi, Ltd.**
**Tokyo 100-8280 (JP)**

(72) Inventors:
• **MUTO, Kazuo**
**Tokyo 100-8280 (JP)**

• **UEKI, Yosuke**
**Tokyo 100-8280 (JP)**
• **NAMURA, Nobuo**
**Tokyo 100-8280 (JP)**

(74) Representative: **Strehl Schübel-Hopf & Partner**
**Maximilianstrasse 54**
**80538 München (DE)**

(56) References cited:
**JP-A- 2016 035 208       US-A1- 2010 138 267
US-A1- 2015 066 468       US-A1- 2015 176 569
US-A1- 2016 010 628       US-A1- 2016 160 842
US-A1- 2016 252 075**

**Description**

Technical Field

The present invention relates to a state monitoring device that monitors a state of a wind power generating device, a state monitoring system using the same, and a monitoring method of a wind power generating device.

Background Art

In recent years, from the viewpoint of conservation of global environment, a wind power generating device that generates electricity by using wind power attracts attention. In general, a wind power generating device has a rotor having a plurality of blades attached to a hub, and is configured to drive a generator by rotational energy of the rotor rotating by being subjected to the wind.

Normally, conditions of the wind which the wind power generating device is subjected to vary by an influence of topography and the like. When an actual wind condition becomes more severe than designed assumption, fluctuation load that the wind power generator receives increases. Therefore, each component (such as blade, nacelle, tower, and auxiliary machinery) of the wind power generating device may be damaged earlier than assumed at the time of design, and there is a possibility that the replacement timing comes earlier. In a case where unexpected damage occurs, since it takes time to arrange replacement components or arrange for replacement works, downtime occurs and there is a concern that loss of power generation companies or manufacturers will increase.

As a countermeasure against this, a method of installing a load measuring device in the wind power generating device to monitor the load applied to each component of the wind power generating device is known. However, since the load measuring device is expensive, there is a problem that the installation cost increases. In addition, the load measuring device requires replacement or calibration periodically from the viewpoint of durability, and there is also a problem that the running cost also increases.

Regarding this, for example, a technology described in PTL 1 has been proposed. PTL 1 discloses a device storing a first correlation table in which wind velocity, a power generation amount (output), and a wind condition parameter are correlated, a second correlation table in which wind velocity, a pitch angle, and a wind condition are correlated, and a fatigue load table in which a wind parameter and fatigue load applied to the wind power generating device are correlated, which are created in advance from data on the wind velocity, power generation amount (output), a pitch angle of a blade available with a simple device configuration, in which a wind condition corresponding to a measured wind velocity and power generation amount is extracted from the first correlation table or a wind condition parameter corresponding to the measured wind velocity and pitch angle is extracted from the second correlation table, a fatigue load of components of the wind power generating device is estimated from the fatigue load table based on the extracted wind condition parameter, service life of the components is estimated, and maintenance information is output. Documents US201000138267, US20160010628 and US20160252075 disclose additional examples of a state monitoring device for a wind turbine.

Citation List

Patent Literature

PTL 1: JP-A-2015-117682

Non-Patent Document

NPL 1: Izumi Ushiyama, "Introduction to Windmill Engineering" second edition, published by Mori Kita, August 13, 2013, pp. 81-98

Summary of Invention

Technical Problem

In the configuration described in PTL 1, the first correlation table, the second correlation table, and the fatigue load table are created in advance on the premise that the wind turbine constituting the wind power generating device is normally controlled. Here, the description that the wind turbine is normally controlled means a state in which a pitch angle of a blade, an azimuth angle of nacelle, or the like is appropriately controlled with respect to wind velocity, wind direction, or the like.

However, due to failure of a pitch actuator that controls the pitch angle of the blade or an actuator that controls the azimuth angle of the nacelle, there may be a state where the pitch angle of the blade or the azimuth angle of the nacelle cannot be controlled according to a given control command value. In such a state, since the wind condition parameter stored in the above-mentioned first correlation table or the second correlation table is a value not reflecting a state, there may be a defect that an appropriate fatigue load cannot be estimated.

The present invention has been made in view of the above circumstances, and an object thereof is to provide a state monitoring system and method which estimate fatigue load applied to a wind power generating device and evaluate structural integrity of the wind power generating device, with a simple device configuration using a previously installed general control sensor of a wind power generating device, even in a case where the wind turbine is not normally controlled.

Therefore, the present invention provides a state monitoring device of a wind power generating device which can satisfactorily monitor the structural integrity of the wind power generating device by using a control sensor existing in the wind power generating device even in a case where the wind power generating device is not normally controlled, a state monitoring system including the same, and a state monitoring method of a wind power generating device.

Solution to Problem

In order to solve the problem, a state monitoring device of a wind power generating device according to the present invention includes: a design information database which stores therein at least data of a structural model of a wind power generating device, a blade aerodynamic model, blade mass distribution, and/or a tower shape; an external force estimation unit that estimates external force applied to the wind power generating device, based on measured data from a control sensor installed in the wind power generating device and the data of the blade aerodynamic model, the blade mass distribution, and/or the tower shape; a deformation amount estimation unit that estimates a deformation amount of the wind power generating device, based on the external force estimated by the external force estimation unit and the structural model of the wind power generating device; and an evaluation unit that obtains an index relating to structural integrity of the wind power generating device, based on the deformation amount estimated by the deformation amount estimation unit, in which the obtained index relating to the structural integrity is displayed on a display screen.

In addition, a state monitoring system of a wind power generating device according to the present invention includes a wind power generating device including a rotor including a hub and at least one blade, a nacelle accommodating a speed increasing gear and a generator, and a tower rotatably supporting the nacelle; and a state monitoring device that monitors a state of the wind power generating device, in which the state monitoring device includes a design information database which stores therein at least data of a structural model of a wind power generating device, a blade aerodynamic model, blade mass distribution, and/or a tower shape; an external force estimation unit that measures an external force applied to the wind power generating device, based on measured data from a control sensor installed in the wind power generating device and the data of the blade aerodynamic model, the blade mass distribution, and/or the tower shape; a deformation amount estimation unit that estimates a deformation amount of the wind power generating device, based on the external force estimated by the external force estimation unit and the structural model of the wind power generating device; and an evaluation unit that obtains an index relating to structural integrity of the wind power generating device, based on the deformation amount estimated by the deformation amount estimation unit, wherein the obtained index relating to the structural integrity is displayed on a display screen.

In addition, a state monitoring method of a wind power generating device includes: estimating an external force applied to the wind power generating device, based on at least data of a structural model of the wind power generating device, a blade aerodynamic model, blade mass distribution, and/or a tower shape and measured data from a control sensor; estimating a deformation amount of the wind power generating device, based on the estimated external force applied to the wind power generating device and the structural model of the wind power generating device; and obtaining an index relating to structural integrity of the wind power generating device, based on the estimated deformation amount, in which the obtained index relating to the structural integrity is displayed on a display screen.

Advantageous Effects of Invention

According to the present invention, it is possible to provide a state monitoring device of a wind power generating device which can satisfactorily monitor the structural integrity of the wind power generating device by using a control sensor existing in the wind power generating device even in a case where the wind power generating device is not normally controlled, a state monitoring system including the same, and a state monitoring method of a wind power generating device.

Objects, configurations, and effects other than those described above will be clarified using the description of embodiments below.

Brief Description of Drawings

[Fig. 1] Fig. 1 is an overall schematic configuration diagram of a state monitoring system of Example 1 according to an example of the present invention.
[Fig. 2] Fig. 2 is a functional block diagram of a state monitoring device illustrated in Fig. 1.
[Fig. 3] Fig. 3 is a diagram illustrating a flow of data of a calculation processing unit configuring the state monitoring device illustrated in Fig. 1.
[Fig. 4] Fig. 4 is a diagram illustrating an example of a display screen of a display device configuring an output unit illustrated in Fig. 1.
[Fig. 5] Fig. 5 is an overall schematic configuration diagram of a state monitoring system of Example 2 according to another example of the present invention.
[Fig. 6] Fig. 6 is a functional block diagram of a state monitoring device illustrated in Fig. 5.
[Fig. 7] Fig. 7 is a diagram illustrating a flow of data of a calculation processing unit configuring the state monitoring device illustrated in Fig. 5.
[Fig. 8] Fig. 8 is a schematic processing flowchart of the state monitoring device illustrated in Fig. 5.
[Fig. 9] Fig. 9 is a diagram illustrating wind shear.
[Fig. 10] Fig. 10 is a diagram illustrating tower shadow.
[Fig. 11] Fig. 11 is an overall schematic configuration diagram of a state monitoring system of Example 3 according to still another example of the present invention.
[Fig. 12] Fig. 12 is a functional block diagram of a state monitoring device illustrated in Fig. 11.
[Fig. 13] Fig. 13 is a diagram illustrating a flow of data of a calculation processing unit configuring the state monitoring device illustrated in Fig. 11.
[Fig. 14] Fig. 14 is a diagram illustrating a flow of data of an estimated deformation amount correction unit illustrated in Fig. 13.
[Fig. 15] Fig. 15 is an overall schematic configuration diagram of a state monitoring system of Example 4 according to still another example of the present invention.

Description of Embodiments

In the present specification, as a wind power generating device according to an embodiment of the present invention, a downwind type wind power generating device is described as an example, but it is also possible to apply to an upwind type wind power generating device in the same manner. In addition, although an example in which a rotor is configured of three blades and a hub is illustrated, the rotor is not limited to this, and the rotor may be configured of a hub and at least one blade. The wind power generating device according to the embodiment of the present invention can be installed at any place of the offshore, a mountainous part, and a plain part.
Hereinafter, examples of the present invention will be described using the drawings. Descriptions in the following are merely examples, and are not intended to limit the embodiments of the present invention.

Example 1

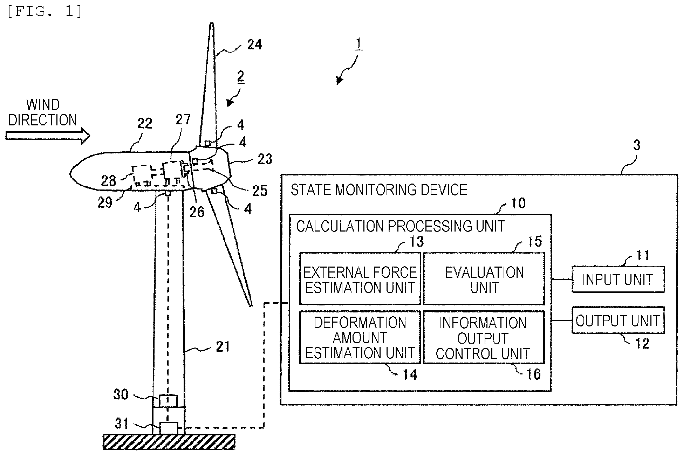

Fig. 1 is an overall schematic configuration diagram of a state monitoring system of Example 1 according to an example of the present invention. As illustrated in Fig. 1, the state monitoring system 1 of the wind power generating device is configured of a wind power generating device 2 and a state monitoring device 3 that monitors states (such as structural integrity) of the wind power generating device 2.
The wind power generating device 2 includes a blade 24 subjected to wind to rotate, a hub 23 supporting the blade 24, a nacelle 22, and a tower 21 rotatably supporting the nacelle 22. In the nacelle 22 provided are a main shaft 25 which is connected to the hub 23 and rotates along with the hub 23, a shrink disc 26 connected to the main shaft 25, a speed increasing gear 27 which is connected to the main shaft 25 via the shrink disc 26 and increases rotational speed, and a generator 28 that rotates a rotor at the rotational speed increased by the speed increasing gear 33 to perform power generation operation. Apart that transmits rotational energy of the blade 24 to the generator 28 is called a power transmission section, and in the present example, the main shaft 25, the shrink disc 26, and the speed increasing gear 27 are included in the power transmission section. The speed increasing gear 27 and the generator 28 are held on the mainframe 29. In addition, the rotor is configured of the blade 24 and the hub 23. As illustrated in Fig. 1, a power converter 30 for converting a frequency of electric power, a switch for switching that opens and closes a current, a transformer, and the like (not illustrated), and a supervisory control and data acquisition (SCADA) 31 are disposed on a bottom (a lower part) in the tower 21.

As illustrated in Fig. 1, a control sensor 4 includes, for example, a sensor which is installed at the base of the blade 24 to measure a blade pitch angle, a sensor which is installed at the base of the main shaft 25 to measure a rotor azimuth angle, a sensor which measures an azimuth angle of the nacelle 22, and an anemometer (not illustrated) which is installed on the top of the nacelle 22 to measure a wind velocity. In addition, the control sensor 4 further includes sensors (not illustrated) that measure a wind direction, a rotation speed of the generator 28, a power generation amount, and the like. In other words, the control sensor 4 is a sensor that measures various states necessary for controlling the wind power generating device 2.

The SCADA 31 acquires the measured data (information) from the above-described control sensor 4 via a signal line, appropriately controls a pitch angle, a nacelle azimuth angle, the generator rotation speed, and the like based on the acquired measured data (information), and additionally, transmits the acquired measured data (information) to the state monitoring device 3 of the wind power generating device via the signal line. Further, the SCADA 31 and the state monitoring device 3 of the wind power generating device may be configured to be connected to each other via a network such as the Internet or an Intranet.

The state monitoring device 3 that monitors a state (such as the structural integrity) of the wind power generating device 2 includes a calculation processing unit 10, an input unit 11, and an output unit 12. The calculation processing unit 10 includes at least an external force estimation unit 13, a deformation amount estimation unit 14, an evaluation unit 15, and an information output control unit 16. The input unit 11 is, for example, an input device such as a keyboard or a mouse, and is used when a user inputs some relating to the state monitoring device 3. The output unit 12 is, for example, a display device such as a liquid crystal display (LCD) or an organic EL display, and a printing output device such as a printer, and displays a process or a result of processing performed by the calculation processing unit 10 or a screen for interactive processing for a user of the state monitoring device 3.

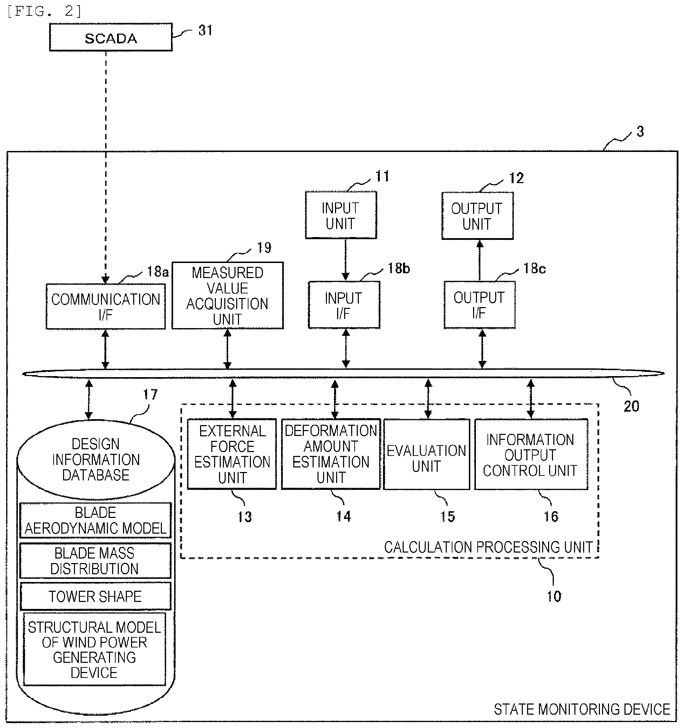

Fig. 2 is a functional block diagram of the state monitoring device 3 illustrated in Fig. 1. As illustrated in Fig. 2, the state monitoring device 3 includes the external force estimation unit 13, the deformation amount estimation unit 14, the evaluation unit 15, the information output control unit 16, a design information database 17, a communication I/F 18a receiving various measured data which is transmitted from the SCADA 31 and obtained by the control sensor 4, a measured value acquisition unit 19, an input I/F 18b, and an output I/F 18c, and these are connected to each other via an internal bus 20 in accessible manner.

In addition, the state monitoring device 3 includes the input unit 11 connected to the input I/F 18b and the output unit 12 connected to the output I/F 18c. The external force estimation unit 13, the deformation amount estimation unit 14, the evaluation unit 15, and the information output control unit 16 which configure the calculation processing unit 10, and the measured value acquisition unit 19 are realized by, for example, a processor such as a central processing unit (CPU) (not illustrated) and a storage device such as a ROM that stores various programs, a RAM that temporarily stores data of an arithmetic process, and an external storage device, and additionally, the processor such as the CPU reads out and executes the various programs stored in the ROM, and stores the operation result as an execution result in the RAM or the external storage device.

The measured value acquisition unit 19 acquires various measured data by the control sensor 4 which have been received via the communication I/F 18a and obtained, via the internal bus 20, and executes, for example, A/D conversion processing, smoothing processing (noise removal), normalization processing, or the like.

The design information database 17 stores in its predetermined storage area at least a blade aerodynamic model, a blade mass distribution, a tower shape, and a structural model of a wind power generating device, which are input by the user via the input unit 11 and the input I/F 18b in advance.

The external force estimation unit 13 estimates an external force applied to the blade 24 and/or the tower 21 of the wind power generating device 2, based on the measured data including at least a wind velocity, a wind direction, a blade pitch angle, a rotor azimuth angle, a rotor rotation speed or a generator rotation speed among various measured data by the control sensor 4 which are processed in the measured value acquisition unit 19, and design information such as an aerodynamic model of the blade 24, the mass distribution of the blade 24, and/or a shape of the tower 21 which are stored in the design information database 17.

The deformation amount estimation unit 14 estimates a deformation amount of the wind power generating device 2 against the external force, based on the external force which is estimated by the external force estimation unit 13 and acquired via the internal bus 20, and the design information such as the structural model of the wind power generating device 2 stored in the design information database 17.

The evaluation unit 15 evaluates the structural integrity of each component of the wind power generating device 2, such as the blade 24 and the tower 21, based on the deformation amount of the wind power generating device 2 which is estimated by the deformation amount estimation unit 14 and acquired via the internal bus 20.

The information output control unit 16 displays information indicating the structural integrity of the wind power generating device 2 which is evaluated by the evaluation unit 15 and acquired via the internal bus 20, on a display screen of the display device configuring the output unit 12 via the internal bus 20 and the output I/F 18c. Accordingly, it possible for a user of the state monitoring device 3 to easily view and recognize the structural integrity of the wind power generating device 2. Further, in the present example, a configuration was made such that the SCADA 31 disposed in the tower 21 of the wind power generating device 2 inputs the various measured data obtained by the control sensor 4 to the communication I/F 18a configuring the state monitoring device 3, and however, it is not limited to this. For example, a configuration may be made such that the various measured data is input to the communication I/F 18a configuring the state monitoring device 3 via a signal line from each control sensor 4.

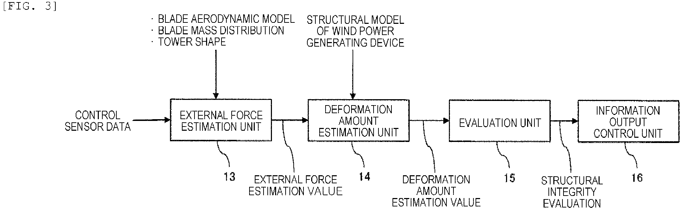

Next, a flow of data of the calculation processing unit 10 configuring the state monitoring device 3 will be described. Fig. 3 is a diagram illustrating the flow of data of the calculation processing unit 10 configuring the state monitoring device 3 illustrated in Fig. 1.

First, the external force estimation unit 13 estimates a fluid force or a force due to an own weight occurring on the tower 21 and/or the blade 24, based on the measured data by the control sensor 4 including at least the wind velocity, the wind direction, the blade pitch angle, the rotor azimuth angle, the rotor rotation speed or a generator rotation speed, and nacelle azimuth angle, among the various measured data by the control sensor 4 which are processed in the measured value acquisition unit 19. The fluid force occurring on the blade 24 is estimated, for example, from the aerodynamic model of the blade 24, which is stored in the design information database 17 and includes a sectional shape of the blade 24 and the like, using blade element momentum theory (NPL 1). In addition, the fluid force applied to the tower 21 is calculated by using, for example, a drag coefficient corresponding to the sectional shape of the tower 21. Here, the drag coefficient corresponding to the sectional shape of the tower 21 is included in the design information of the tower shape stored in the design information database 17.

Next, the deformation amount estimation unit 14 estimates a deformation amount or the like of the wind power generating device 2, based on the external force (external force estimation value) which is estimated by the external force estimation unit 13 and the structural model and the like of the wind power generating device 2 stored in the design information database 17. For example, a displacement, a speed, acceleration, and the like of each component of the wind power generating device 2 are estimated from a finite element model as the following Equation (1).

$$M\ddot{x} + C\dot{x} + Kx = F \qquad \cdots (1)$$

Here, M is a mass matrix of the finite element model of the wind power generating device 2, C is a viscous matrix of the finite element model of the wind power generating device 2, and K is a stiffness matrix of the finite element model of the wind power generating device 2. In addition, a second derivative of x is the acceleration of a node of the finite element model of the wind power generating device 2, a first derivative of x is the speed of the node of the finite element model of the wind power generating device 2, and x is the displacement of the node of the finite element model of the wind power generating device 2. F is an external force estimation value estimated by the external force estimation unit 13.

Next, the evaluation unit 15 calculates a stress or moment occurring in each component of the wind power generating device 2, based on the deformation amount estimation value of the wind power generating device 2 estimated by the deformation amount estimation unit 14, and calculates an index relating to the structural integrity such as degree of damage or remaining life. For example, the frequency for each range of various stress amplitudes included in time series data of the stress may be calculated from the time series data using a rainflow method, and a current degree of damage of the wind power generating device 2 may be calculated from the frequency using the minor rule or the like.

Finally, the information output control unit 16 displays the structural integrity evaluation obtained by the evaluation unit 15 on the screen of the display device configuring the output unit 12.

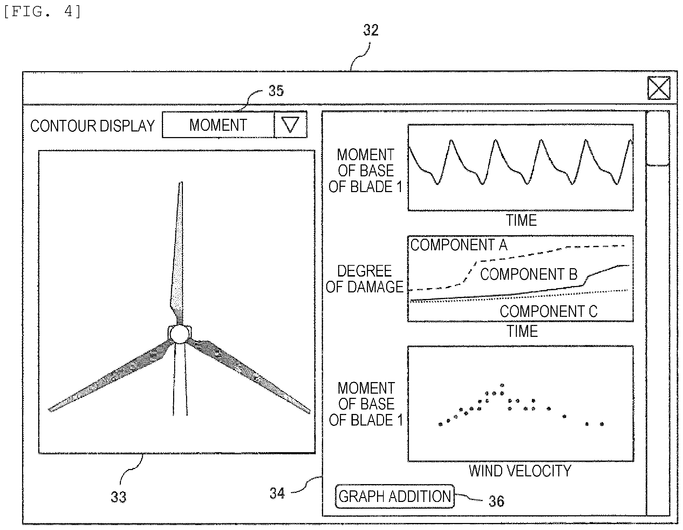

Fig. 4 is a diagram illustrating an example of a display screen of a display device configuring the output unit 12 illustrated in Fig. 1. As illustrated in Fig. 4, the display screen 32 is configured with a display information selection area 35 that receives selection designation of display information by the user, a first display area 33 on which information selected and designated in the display information selection area 35 is contour displayed, and a second display area 34 on which time-series data of stress and/or moment, a time change of the remaining life or the degree of damage or the like as the structural integrity evaluation result calculated by the evaluation unit 15 is displayed.

In the example illustrated in Fig. 4, a state in which the "moment" is selected and designated from a pull-down menu of the display information selection area 35 by the user is illustrated. At this time, moments occurring on the three blades 24 constituting the wind power generating device 2 are contour displayed on the first display area 33. In addition, on the second display area 34, the time series data (time change) of the moment occurring on the base of one blade 24 (blade 1) is displayed on an upper part, and the time changes of the degrees of damage of a component A, a component B, and a component C are displayed in the middle. Here, the component A is, for example, the blade 24, component B is, for example, the speed increasing gear 27, and the component C is, for example, a yaw bearing. The yaw bearing is a bearing used to realize a structure in which the nacelle 22 is rotatably supported by the tower 21. In addition, a graph illustrating the correlation between the moment occurring on the base of the one blade 24 (blade 1) and the wind velocity is displayed on an under part of the second display area 34. In the second display area 34, a graph addition button 36 is provided. When the user clicks the mouse which is the input unit 11, the graph addition button 36 is activated, and the information output control unit 16 further displays another graph on the second display area 34. The user can easily visually confirm a plurality of graphs as the structural integrity evaluation results calculated by the evaluation unit 15, by operating a scroll bar at the right end of the second display area 34.

In addition, in the screen display example illustrated in Fig. 4, with respect to the time series data (time change) of the moment occurring on the base of the one blade 24 (blade 1) displayed in the second display area 34, for example, when a desired time is selected by the user with a mouse pointer, a cursor, or the like, the information output control unit 16 contour-displays the moment occurring on the three blades 24 constituting the wind power generating device 2 at the selected time on the first display area 33. Accordingly, the user can easily confirm the distribution of the moment occurring on the blade 24 at a desired time.

Further, in Fig. 4, an example of contour displaying the moment occurring on the three blades 24 on the first display area 33 is illustrated, and however, it is also possible to contour display the stress occurring on the three blades 24. In this case, the "stress" is selected from the pull down menu of the display information selection area 35. In addition, although an example of contour displaying the index relating to the structural integrity such as the stress or moment on the first display area 33 in a two-dimensional model is illustrated, instead of this, the index relating to the structural integrity such as the stress or moment may also be displayed by overlaying a three-dimensional model.

As described above, according to the present example, it is possible to provide a state monitoring device of a wind power generating device which can satisfactorily monitor the structural integrity of the wind power generating device by using a control sensor existing in the wind power generating device even in a case where the wind turbine is not normally controlled, a state monitoring system including the same, and a state monitoring method of a wind power generating device.

In addition, according to the present example, the user can easily visually confirm the index relating to the structural integrity of the wind power generating device on the display screen interactively, and also operability can be improved.

Example 2

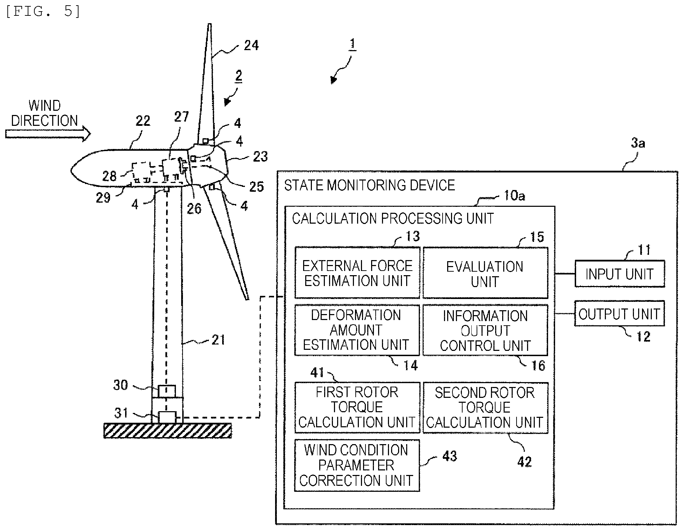

Fig. 5 is an overall schematic configuration diagram of a state monitoring system of Example 2 according to another example of the present invention. In the present example, a point that a first rotor torque calculation unit, a second rotor torque calculation unit, and a wind condition parameter correction unit are further provided in the calculation processing unit configuring the state monitoring device illustrated in Example 1 described above differs from Example 1. The same reference signs are given to the same constituent elements as those in Example 1, and in the following, the description redundant with that of Example 1 will be omitted.

In the present example, an example of a state monitoring system 1 of the wind power generating device 2 that, in a case where the measured data obtained by the control sensor 4 includes the power generation amount and the rotation speed of the generator 28, adjusts a parameter relating to a wind condition to conform to the real world using these values will be described. Accordingly, it is possible to evaluate the structural integrity of the wind power generating device with higher accuracy.

As illustrated in Fig. 5, the state monitoring device 3a that monitors a state (such as the structural integrity) of the wind power generating device 2 and configures the state monitoring system 1 according to the present example includes a calculation processing unit 10a, an input unit 11, and an output unit 12. The calculation processing unit 10a includes at least an external force estimation unit 13, a deformation amount estimation unit 14, an evaluation unit 15, an information output control unit 16, a first rotor torque calculation unit 41, a second rotor torque calculation unit 42, and a wind condition parameter correction unit 43. The input unit 11 is, for example, an input device such as a keyboard or a mouse, and is used when a user inputs some relating to the state monitoring device 3. The output unit 12 is, for example, a display device such as a liquid crystal display (LCD) or an organic EL display, and a printing output device such as a printer, and displays a process or a result of processing performed by the calculation processing unit 10 or a screen for interactive processing for a user of the state monitoring device 3.

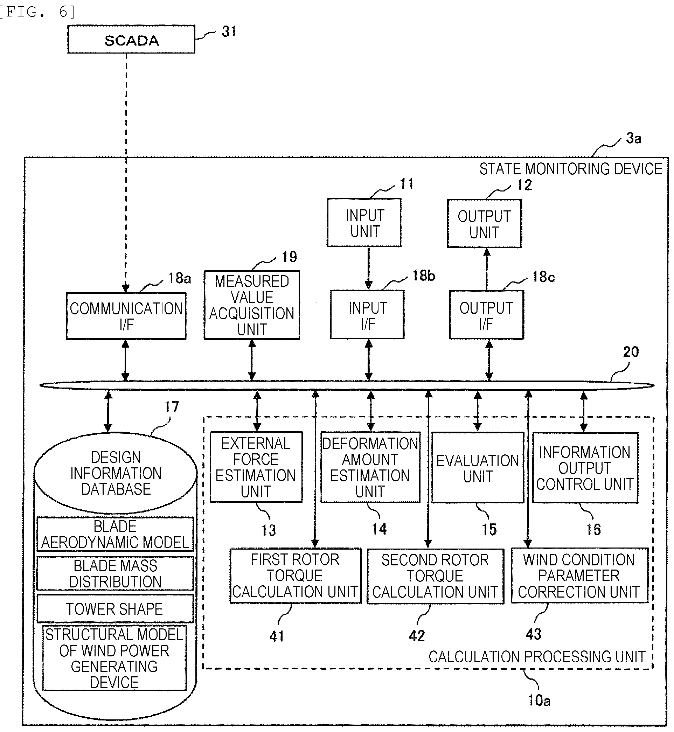

Fig. 6 is a functional block diagram of the state monitoring device 3a illustrated in Fig. 5. As illustrated in Fig. 6, the state monitoring device 3a includes the external force estimation unit 13, the deformation amount estimation unit 14, the evaluation unit 15, the information output control unit 16, a design information database 17, a communication I/F 18a receiving various measured data which is transmitted from the SCADA 31 and obtained by the control sensor 4, a measured value acquisition unit 19, an input I/F 18b, an output I/F 18c, the first rotor torque calculation unit 41, the second rotor torque calculation unit 42, and the wind condition parameter correction unit 43, and these are connected to each other via the internal bus 20 in accessible manner. In addition, the state monitoring device 3a includes the input unit 11 connected to the input I/F 18b and the output unit 12 connected to the output I/F 18c. The external force estimation unit 13, the deformation amount estimation unit 14, the evaluation unit 15, the information output control unit 16, the first rotor torque calculation unit 41, the second rotor torque calculation unit 42, and the wind condition parameter correction unit 43 which configure the calculation processing unit 10a and the measured value acquisition unit 19 are realized by, for example, a processor such as a central processing unit (CPU) (not illustrated) and a storage device such as a ROM that stores various programs, a RAM that temporarily stores data of an arithmetic process, and an external storage device, and additionally, the processor such as the CPU reads out and executes the various programs stored in the ROM, and stores the calculation result as the execution result in the RAM or the external storage device.

The first rotor torque calculation unit 41 calculates the torque applied to the rotor of the wind power generating device 2, based on the external force which is applied to the blade 24, estimated by the external force estimation unit 13, and acquired via the internal bus 20. The second rotor torque calculation unit 42 calculates the torque applied to the rotor of the wind power generating device 2, based on the measured data including the power generation amount and the rotation speed of the generator 28, among the various measured data by the control sensor 4 which are processed in the measured value acquisition unit 19. The wind condition parameter correction unit 43 corrects the wind condition parameter based on the difference between the torque calculated by the first rotor torque calculation unit 41 and the torque calculated by the second rotor torque calculation unit 42.

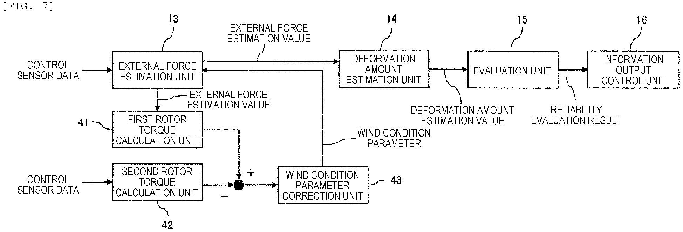

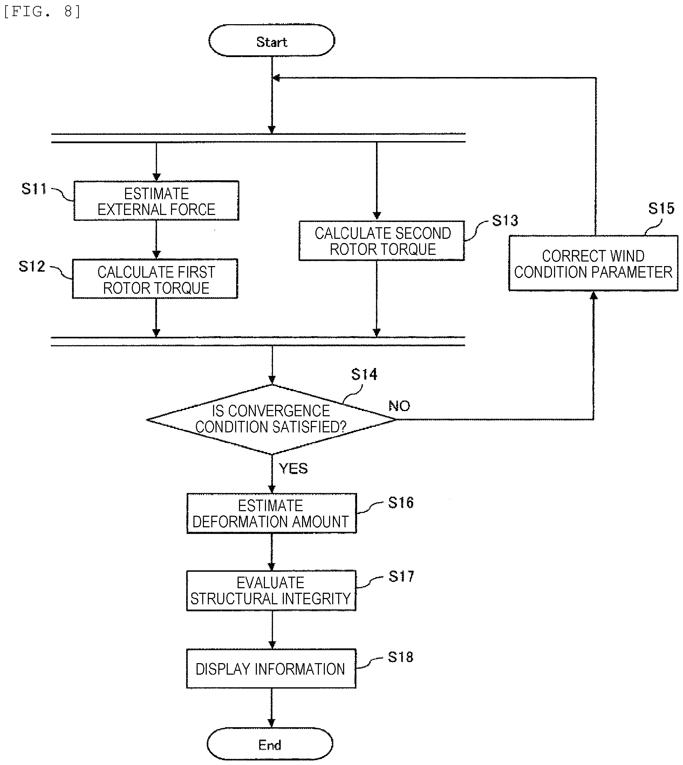

Next, a flow of data of the calculation processing unit 10a configuring the state monitoring device 3a and a flow of processing of the state monitoring device 3a will be described. Fig. 7 is a diagram illustrating a flow of data of a calculation processing unit configuring the state monitoring device illustrated in Fig. 5, and Fig. 8 is a schematic processing flowchart of the state monitoring device illustrated in Fig. 5.

First, as the same in Example 1 described above, the external force estimation unit 13 estimates a fluid force or a force due to an own weight occurring on the blade 24, based on the measured data that is obtained by the control sensor 4 including at least the wind velocity, the wind direction, the blade pitch angle, the rotor azimuth angle, the rotor rotation speed or a generator rotation speed, and the nacelle azimuth angle, among the various measured data by the control sensor 4 which are processed in the measured value acquisition unit 19(Step S11).

The first rotor torque calculation unit 41 calculates the torque applied to the rotor, based on the external force (external force estimation value) which is applied to the blade 24 and estimated by the external force estimation unit 13 (Step S12) .

On the other hand, the second rotor torque calculation unit 42 calculates the torque applied to the rotor, based on the measured data including the power generation amount and the rotation speed of the generator 28, among the various measured data by the control sensor 4 which are processed in the measured value acquisition unit 19(Step S13).

Next, the wind condition parameter correction unit 43 determines whether or not the difference between the torque applied to the rotor calculated by the first rotor torque calculation unit 41 and the torque applied to the rotor calculated by the second rotor torque calculation unit 42 satisfies a convergence condition such as a case of being equal to or less than a predetermined value or no change from the previous iteration (repeated calculation) (Step S14). Here, the no change from the iteration (repeated calculation) means a state in which the difference between the torque applied to the rotor calculated by the first rotor torque calculation unit 41 and the torque applied to the rotor calculated by the second rotor torque calculation unit 42 becomes "0", which corresponds to the case where the convergence condition is satisfied. Accordingly, in this case, processes of Steps S11, S12, and S13 are repeatedly executed until the difference between the torque applied to the rotor calculated by the first rotor torque calculation unit 41 and the torque applied to the rotor calculated by the second rotor torque calculation unit 42 becomes "0" (iteration). In addition, the convergence condition described above is not limited to the difference of "0", and a case where the difference falls within a range of a predetermined value (a case where the difference is equal to or less than the predetermined value) may be regarded as satisfying the convergence condition.

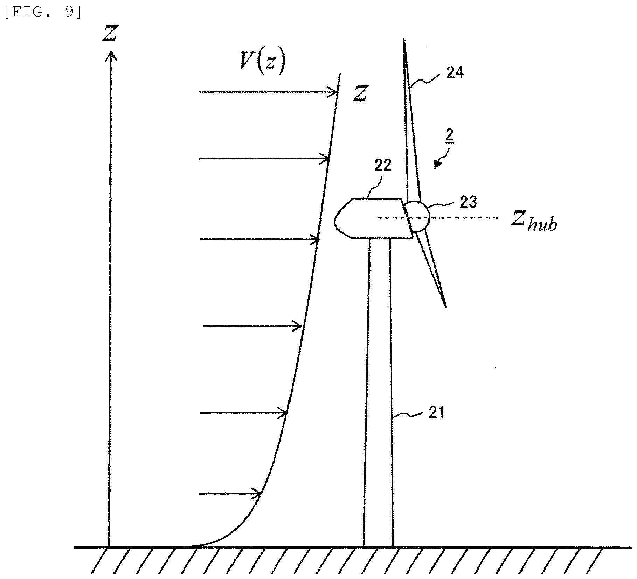

Further, in Step S14, in a case where the determination result by the wind condition parameter correction unit 43 does not satisfy the convergence condition, the process proceeds to Step S15, and the wind condition parameter correction unit 43 changes the parameter relating to a wind condition such as wind shear of tower shadow to be described later. For example, when the wind shear which is a wind velocity distribution in a vertical direction as illustrated in Fig. 9 is defined as the following Equation (2), the wind condition parameter correction unit 43 changes $\alpha_{WS}$ or the like which is a coefficient determining the shape of the wind velocity distribution in the vertical direction.

$$V(z) = V(z_{hub}) \left( \frac{z}{z_{hub}} \right)^{\alpha_{ws}} \quad \cdot \cdot \cdot (2)$$

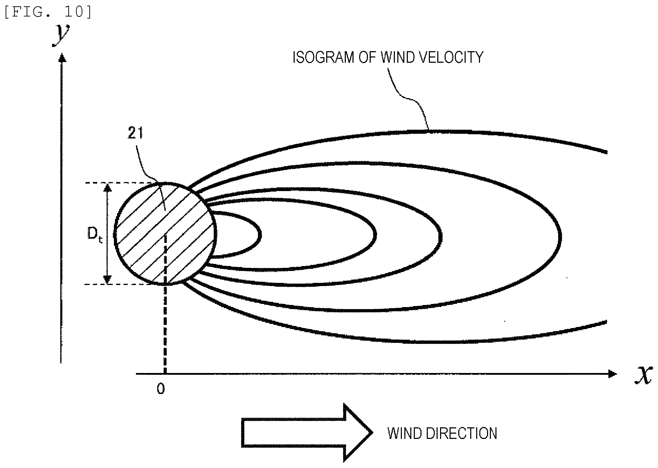

Here, V(Z) represents the wind velocity at the height Z from the ground surface, and $Z_{hub}$ represents the wind velocity at the height of hub 23 (near the nacelle 22). In addition, Fig. 10 is a diagram illustrating tower shadow. As illustrated in Fig. 10, for example, when the tower shadow at the height Z which is the change of the wind velocity due to the influence of the tower 21 is defined as the following Equation (3), the wind condition parameter correction unit 43 changes the maximum value $\Delta_0$ of a speed loss rate, a ratio $W^0_{ts}$ between the maximum influence range of the tower shadow and a diameter $D_t$ of the tower 21 of the wind power generating device 2, a reference distance $l_{reft}$ and the like.

$$V(x, y) = \left\{ 1 - \Delta(x)\cos^2\left(\frac{\pi y}{W_{ts}(x)D_t}\right) \right\} V \quad \cdots (3)$$

Where, $D_t$ is a diameter of the tower 21 at the height Z, 1 is the square root of $(x/D_t l_{ref})$, $\Delta(x) = \Delta_0/l$, $W_{ts}(x) = W^0_{ts}l$, V is a wind velocity in upstream of the tower 21 without an effect of the tower shadow. As illustrated in Fig. 10, an x-axis is the wind direction and a y-axis is a direction orthogonal to the wind direction. The processes of Steps S11 to S15 described above are continued until the convergence condition is satisfied. Further, an optimization method such as a gradient method may be used to change the parameters of the wind condition parameter correction unit 43.

When the convergence condition is satisfied in Step S14, the deformation amount estimation unit 14 estimates the deformation amount or the like of the wind power generating device 2, based on the external force (external force estimation value) which is estimated by the external force estimation unit 13 and the structural model or the like of the wind power generating device 2 stored in the design information database 17 (Step S16).

In Step S17, the evaluation unit 15 calculates a stress or moment occurring in each component of the wind power generating device 2, based on the deformation amount estimation value of the wind power generating device 2 estimated by the deformation amount estimation unit 14, and calculates an index relating to the structural integrity such as degree of damage or remaining life.

In Step S18, the information output control unit 16 displays the structural integrity evaluation by the evaluation unit 15 on the screen of the display device configuring the output unit 12.

As described above, according to the present example, since the wind condition parameter can be estimated more accurately, it is possible to monitor the structural integrity of the wind power generating device with higher accuracy in addition to the effects of Example 1.

Example 3

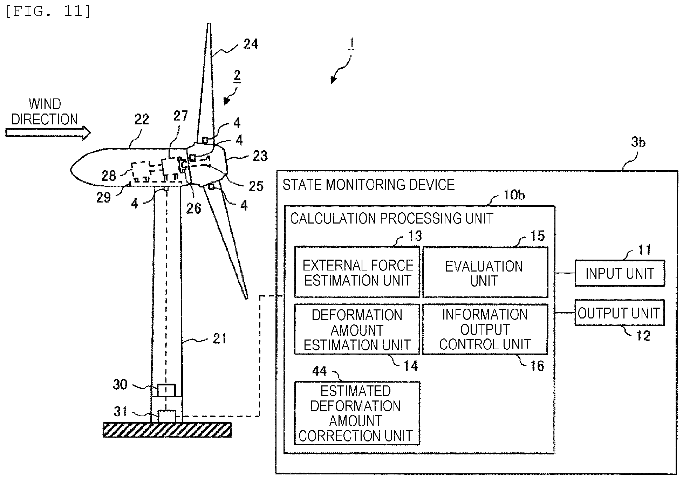

Fig. 11 is an overall schematic configuration diagram of a state monitoring system of Example 3 according to still another example of the present invention. In the present example, a point that an estimated deformation amount correction unit is further provided in the calculation processing unit configuring the state monitoring device illustrated in Example 1 described above differs from Example 1. The same reference signs are given to the same constituent elements as those in Example 1, and in the following, the description redundant with that of Example 1 will be omitted.

In the present example, will be described an example of the state monitoring system 1 of the wind power generating device 2 that, in a case where a strain sensor or the like used to control an independent pitch of the blade 24 is included in the control sensor 4 and the measured data on the load applied to the base of the blade 24 is included in the measured data obtained by the control sensor 4, corrects the estimation value of the deformation amount, based on the measured data on this load applied to the base of the blade 24. Accordingly, it is possible to evaluate the structural integrity of the wind power generating device 2 with higher accuracy.

As illustrated in Fig. 11, the state monitoring device 3b that monitors a state (such as the structural integrity) of the wind power generating device 2 and configures the state monitoring system 1 according to the present example includes a calculation processing unit 10b, an input unit 11, and an output unit 12. The calculation processing unit 10b includes at least the external force estimation unit 13, the deformation amount estimation unit 14, the evaluation unit 15, the information output control unit 16, and an estimated deformation amount correction unit 44. The input unit 11 is, for example, an input device such as a keyboard or a mouse, and is used when a user inputs some relating to the state monitoring device 3. The output unit 12 is, for example, a display device such as a liquid crystal display (LCD) or an organic EL display, and a printing output device such as a printer, and displays a process or a result of processing performed by the calculation processing unit 10 or a screen for interactive processing for a user of the state monitoring device 3.

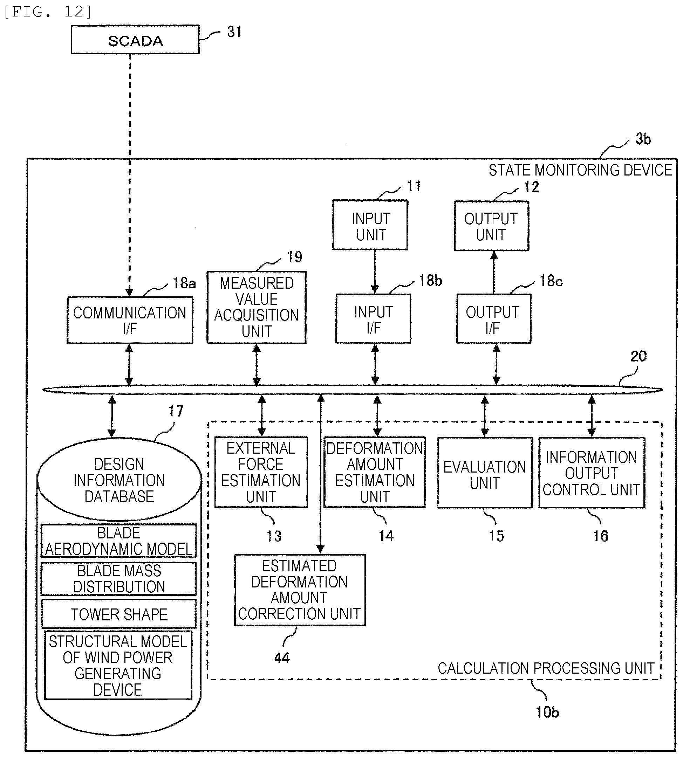

Fig. 12 is a functional block diagram of a state monitoring device 3b illustrated in Fig. 11. As illustrated in Fig. 12, the state monitoring device 3b includes the external force estimation unit 13, the deformation amount estimation unit 14, the evaluation unit 15, the information output control unit 16, a design information database 17, a communication I/F 18a receiving various measured data by the control sensor 4 which are transmitted from the SCADA 31, a measured value acquisition unit 19, an input I/F 18b, an output I/F 18c, and the estimated deformation amount correction unit 44, and these are connected to each other via an internal bus 20 in accessible manner. In addition, the state monitoring device 3b includes the input unit 11 connected to the input I/F 18b and the output unit 12 connected to the output I/F 18c. The external force estimation unit 13, the deformation amount estimation unit 14, the evaluation unit 15, the information output control unit 16, and the estimated deformation amount correction unit 44 which configure the calculation processing unit 10b, and the measured value acquisition unit 19 are realized by, for example, a processor such as a central processing unit (CPU) (not illustrated) and a storage device such as a ROM that stores various programs, a RAM that temporarily stores data of an arithmetic process, and an external storage device, and additionally, the processor such as the CPU reads out and executes the various programs stored in the ROM, and stores the operation result which is the execution result in the RAM or the external storage device.

The estimated deformation amount correction unit 44 corrects the deformation amount (deformation amount estimation value) of the blade 24 of the wind power generating device 2 estimated by the deformation amount estimation unit 14, based on the measured data on the load of the base of the blade 24 measured by the control sensor 4 such as a strain sensor, and outputs the deformation amount to the evaluation unit 15 via the internal bus 20. In addition, at the same time, the parameter relating to the structural strength of the blade 24 may be modified, and such value may be output to the evaluation unit 15.

The evaluation unit 15 evaluates the structural integrity of each component of the wind power generating device 2, such as the blade 24 and/or the tower 21, based on the corrected deformation amount estimation value of the wind power generating device 2 which is input from the estimated deformation amount correction unit 44 via the internal bus 20. Further, the structural integrity may be evaluated using the parameter relating to the structural strength of the blade 24 output by the estimated deformation amount correction unit 44.

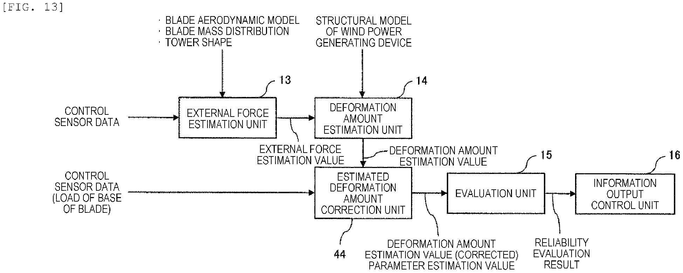

Next, a flow of data of the calculation processing unit 10b configuring the state monitoring device 3b will be described. Fig. 13 is a diagram illustrating a flow of data of the calculation processing unit 10b configuring the state monitoring device 3b illustrated in Fig. 11.

First, the external force estimation unit 13 estimates a fluid force or a force due to an own weight occurring on the blade 24, based on the measured data by the control sensor 4 including at least the wind velocity, the wind direction, the blade pitch angle, the rotor azimuth angle, the rotor rotation speed or a generator rotation speed, and nacelle azimuth angle, among the various measured data by the control sensor 4 which are processed in the measured value acquisition unit 19. Similarly to Example 1 described above, the fluid force occurring on the blade 24 is estimated, for example, from the aerodynamic model of the blade 24, which is stored in the design information database 17 and includes a sectional shape or the like of the blade 24, by using blade element momentum theory (NPL 1) or the like.

Next, the deformation amount estimation unit 14 estimates a deformation amount or the like of the wind power generating device 2, based on the external force (external force estimation value) which is estimated by the external force estimation unit 13 and the structural model of the wind power generating device 2 stored in the design information database 17. The deformation amount of the wind power generating device 2 estimated by the deformation amount estimation unit 14 is output to the estimated deformation amount correction unit 44 as a deformation amount estimation value.

The estimated deformation amount correction unit 44 corrects the deformation amount estimation value estimated by the deformation amount estimation unit 14, based on the difference between the load of the base of the blade 24 calculated from the deformation amount estimation value obtained from the deformation amount estimation unit 14 and the load calculated from the measured data on the load applied to the base of the blade 24 measured by a strain sensor or the like included in the control sensor 4, and the corrected deformation amount estimation value is output to the evaluation unit 15. In this case, the estimated deformation amount correction unit 44 may correct the parameter relating to the structural strength of the blade 24 to output such value to the evaluation unit 15.

The evaluation unit 15 calculates a stress or moment occurring on each component of the wind power generating device 2, based on the deformation amount estimation value of the wind power generating device 2 after correction, which has been corrected by the estimated deformation amount correction unit 44, and calculates index relating to the structural integrity such as degree of damage and remaining life. The index relating to the structural integrity such as degree of damage and remaining life calculated by the evaluation unit 15 are output to the information output control unit 16 as an evaluation result of reliability. In this case, a configuration may be adapted to correct the parameter relating to the structural strength of the blade 24 and output a changed value of the corrected parameter to the information output control unit 16 as an index relating to the structural integrity.

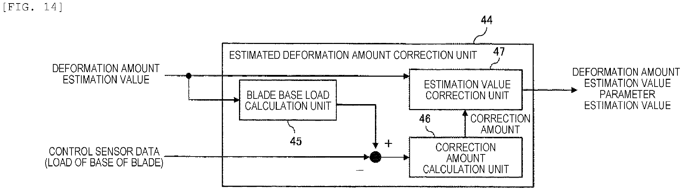

Fig. 14 is a diagram illustrating a flow of data of the estimated deformation amount correction unit 44 illustrated in Fig. 13. As illustrated in Fig. 14, the estimated deformation amount correction unit 44 includes a blade base load calculation unit 45, a correction amount calculation unit 46, and an estimation value correction unit 47.

The deformation amount estimation value from the deformation amount estimation unit 14 is input to the blade base load calculation unit 45 and the estimation value correction unit 47 respectively. The blade base load calculation unit 45 calculates the load of the base of the blade 24 based on the input deformation amount estimation value. Next, a difference between the load of the base of the blade 24 calculated by the blade base load calculation unit 45 and the measured data on the load which is applied to the base of the blade 24 and measured by the strain sensor or the like included in the control sensor 4 installed on the base of the blade 24 is input to the correction amount calculation unit 46.

The correction amount calculation unit 46 calculates the correction amount of the deformation amount estimation value of the wind power generating device 2 based on the above input difference and outputs the correction amount to the estimation value correction unit 47.

The estimation value correction unit 47 corrects the deformation amount estimation value of the wind power generating device 2 based on the correction amount input from the correction amount calculation unit 46 and the deformation amount estimation value input from the deformation amount estimation unit 14. Here, the correction amount calculation unit 46 may be configured to correct the parameter relating to the structural strength of the blade 24 such as rigidity, in addition to calculating the correction amount.

As described above, according to the present example, by feedbacking on information on the load actually applied to the base of the blade, it is possible to correct the estimation value of the load or the parameter relating to the structural strength of the blade and monitor the structural integrity of the wind power generating device with higher accuracy in addition to the effects of Example 1.

Example 4

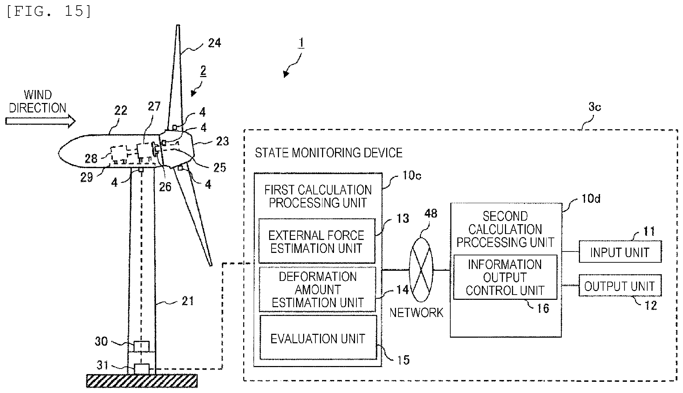

Fig. 15 is an overall schematic configuration diagram of a state monitoring system of Example 4 according to still another example of the present invention. In the present example, a point that the first calculation processing unit constructed in a server or the like and the second calculation processing unit realized in an electronic terminal device are connected to be capable of communicating with each other via the network to configure the state monitoring device differs from Example 1. The same reference signs are given to the same constituent elements as those in Example 1, and in the following, the description redundant with that of Example 1 will be omitted.

As illustrated in Fig. 15, the state monitoring system 1 of the wind power generating device is configured of a wind power generating device 2 and a state monitoring device 3c that monitors states (such as structural integrity) of the wind power generating device 2.

The state monitoring device 3c includes a first calculation processing unit 10c that is connected to the SCADA 31 disposed at the bottom (lower part) in the tower 21 constituting the wind power generating device 2 via a signal line, a second calculation processing unit 10d that is disposed on a remote location from the first calculation processing unit 10c and connected to the input unit 11 and output unit 12, and a network 48 that connects the first calculation processing unit 10c and the second calculation processing unit 10d to be capable of communicating with each other. Here, the network 48 may be either wired or wireless. The first calculation processing unit 10c is, for example, mounted on a server, and includes at least the external force estimation unit 13, the deformation amount estimation unit 14, and the evaluation unit 15. The second calculation processing unit 10d is, for example, mounted on an electronic terminal device such as a PC, a smartphone or a tablet, and includes an information output control unit 16. Further, the external force estimation unit 13, the deformation amount estimation unit 14, and the evaluation unit 15 which configure the first calculation processing unit 10c are similar to those of Example 1 described above, and in addition, the information output control unit 16 configuring the second calculation processing unit 10d is similar to that of Example 1, and therefore, descriptions thereof are omitted here.

When design information such as a blade aerodynamic model, a blade mass distribution, a tower shape, and a structural model of the wind power generating device is input via the input unit by the user, the design information is stored in a predetermined storage area of a design information database (not illustrated) via the communication I/F (not illustrated) of the second calculation processing unit 10d and the network 48 or via the communication I/F (not illustrated) of the first calculation processing unit 10c. In addition, the evaluation unit 15 configuring the first calculation processing unit 10c evaluates the structural integrity of each component of the wind power generating device 2, such as blade 24 and/or the tower 21, based on the deformation amount of the wind power generating device 2 estimated by the deformation amount estimation unit 14, and transmits the evaluation result of the structural integrity to the second arithmetic processing unit 10d via the communication I/F (not illustrated) of the first calculation processing unit 10c and the network 48. The information output control unit 16 configuring the second calculation processing unit 10d displays the same display screen example as the display screen 32 illustrated in FIG. 4 described in Example 1 described above on the display device of the output unit 12 connected to the second calculation processing unit 10d. In this manner, by configuring the state monitoring apparatus 3c to be divided or dispersed into the first calculation processing unit 10c and the second calculation processing unit 10d, the processes up to the structural integrity evaluation of the wind power generating apparatus 2 are executed in the first calculation processing unit 10c and only necessary evaluation results of the structural integrity of the wind power generating apparatus 2 is transmitted to the second calculation processing unit 10d, whereby even in a case where a communication environment of the network 48 is poor, it is possible to satisfactorily monitor the structural integrity of the wind power generating apparatus . In addition, particularly, the second calculation processing unit 10d mounted on the electronic terminal device can be disposed on a monitoring center positioned at a remote location from the place where the wind power generating apparatus 2 is installed. In addition, in a case where the second

**EP 3 511 567 B1**

calculation processing unit 10d is mounted on a portable electronic terminal device such as a smartphone or a tablet, even in a case where the user is in any place, it becomes possible to easily monitor the structural integrity of the wind power generating apparatus 2.

The first calculation processing unit 10c may be configured to include the external force estimation unit 13, the deformation amount estimation unit 14, the evaluation unit 15, the first rotor torque calculation unit 41, the second rotor torque calculation unit 42, and the wind condition parameter correction unit 43. In addition, the first calculation processing unit 10c may be configured to include the external force estimation unit 13, the deformation amount estimation unit 14, the evaluation unit 15, and the estimated deformation amount correction unit 44.

As above, according to the present example, by configuring the state monitoring apparatus 3c to be divided or dispersed into the first calculation processing unit 10c and the second calculation processing unit 10d, the processes up to the structural integrity evaluation of the wind power generating apparatus 2 are executed in the first calculation processing unit 10c and only necessary evaluation result of the structural integrity of the wind power generating apparatus 2 is transmitted to the second calculation processing unit 10d, whereby even in a case where a communication environment of the network 48 is poor, it is possible to satisfactorily monitor the structural integrity of the wind power generating apparatus 2.

In addition, according to the present example, in a case where the second calculation processing unit 10d is mounted on a portable electronic terminal device such as a smartphone or a tablet, even in a case where the user is in any place, it becomes possible to easily monitor the structural integrity of the wind power generating apparatus 2.

In Examples 1 to 4 described above, a case of monitoring a state of one wind power generating apparatus 2 was illustrated as an example, but also it goes without saying that it is similarly applicable to a wind farm where a plurality of wind power generating devices 2 are installed, similarly.

The invention is defined by the appended claims.

Reference Signs List

| | |
|---|---|
| 1: | state monitoring system |
| 2: | wind power generating device |
| 3, 3a, 3b, 3c: | state monitoring device |
| 4: | control sensor |
| 10, 10a, 10b: | calculation processing unit |
| 10c: | first calculation processing unit |
| 10d: | second calculation processing unit |
| 11: | input unit |
| 12: | output unit |
| 13: | external force estimation unit |
| 14: | deformation amount estimation unit |
| 15: | evaluation unit |
| 16: | information output control unit |
| 17: | design information database |
| 18a: | communication I/F |
| 18b: | input I/F |
| 18c: | output I/F |
| 19: | measured value acquisition unit |
| 20: | internal bus |
| 21: | tower |
| 22: | nacelle |
| 23: | hub |
| 24: | blade |
| 25: | main shaft |
| 26: | shrink disc |
| 27: | speed increasing gear |
| 28: | generator |
| 29: | mainframe |
| 30: | power converter |
| 31: | SCADA |
| 32: | display screen |

33:     first display area
34:     second display area
35:     display information selection area
36:     graph addition button
41:     first rotor torque calculation unit
42:     second rotor torque calculation unit
43:     wind condition parameter correction unit
44:     estimated deformation amount correction unit
45:     blade base load calculation unit
46:     correction amount calculation unit
47:     estimation value correction unit
48:     network

**Claims**

1.  A state monitoring device of a wind power generating device, the state monitoring device comprising:

    a design information database in which at least data of a structural model of a wind power generating device, a blade aerodynamic model and/or blade mass distribution and/or a tower shape is stored;
    an external force estimation unit that estimates external force applied to the wind power generating device, based on measured data from a control sensor installed in the wind power generating device and the data of the blade aerodynamic model and/or the blade mass distribution and/or the tower shape;
    a deformation amount estimation unit that estimates a deformation amount of the wind power generating device, based on the external force estimated by the external force estimation unit and the structural model of the wind power generating device; and
    an evaluation unit that obtains an index relating to structural integrity of the wind power generating device, based on the deformation amount estimated by the deformation amount estimation unit, wherein
    the obtained index relating to the structural integrity is displayed on a display screen.

2.  The state monitoring device of a wind power generating device according to claim 1, further comprising:

    a first rotor torque calculation unit that calculates torque applied to a rotor of the wind power generating device, based on the external force which is applied to the wind power generating device and estimated by the external force estimation unit;
    a second rotor torque calculation unit that calculates the torque applied to the rotor of the wind power generating device, based on measured data which includes a power generation amount and a rotation speed of a generator and is measured by the control sensor; and
    a wind condition parameter correction unit that corrects a wind condition parameter, based on difference in torque which is applied to the rotor of the wind power generating device and calculated by the first rotor torque calculation unit and the second rotor torque calculation unit, and outputs the corrected wind condition parameter to the external force estimation unit.

3.  The state monitoring device of a wind power generating device according to claim 2, wherein
    the wind condition parameter correction unit corrects the wind condition parameter such that the difference in the torque which is applied to the rotor of the wind power generating device and calculated by the first rotor torque calculation unit and the second rotor torque calculation unit is minimized or is within a predetermined range.

4.  The state monitoring device of a wind power generating device according to claim 1, wherein
    the control sensor includes a strain sensor installed in a base of the blade, and
    the state monitoring device further includes an estimated deformation amount correction unit that corrects a deformation amount of the wind power generating device, estimated by the deformation amount estimation unit, based on measured data on a load applied to the base of the blade, measured by the strain sensor, and
    the estimated deformation amount correction unit outputs a corrected deformation amount of the wind power generating device to the evaluation unit.

5.  The state monitoring device of a wind power generating device according to claim 4, wherein
    the estimated deformation amount correction unit includes

a blade base load calculation unit that calculates the load applied to the base of the blade, based on the deformation amount of the wind power generating device estimated by the deformation amount estimation unit,

a correction amount calculation unit that calculates a correction amount of the deformation amount of the wind power generating device estimated by the deformation amount estimation unit, based on a difference between the load applied to the base of the blade calculated by the blade base load calculation unit and the measured data on the load applied to the base of the blade measured by the strain sensor, and

a correction amount calculation unit that corrects the deformation amount of the wind power generating device, based on the correction amount calculated by the correction amount calculation unit and the deformation amount of the wind power generating device estimated by the deformation amount estimation unit.

6. The state monitoring device of a wind power generating device according to claim 1, wherein
the index relating to the structural integrity of the wind power generating device, obtained by the evaluation unit includes time series data of stress and/or moment occurring on the blade, and
the state monitoring device further includes an information output control unit that performs control to display the time series data of the stress and/or moment occurring on the blade on the display screen.

7. The state monitoring device of a wind power generating device according to claim 6, wherein
the display screen includes at least a first display area and a second display area, and
the information output control unit displays a distribution of the stress and/or moment occurring on the blade on the first display area by overlaying a two-dimensional model or a three-dimensional model of blade therewith, and displays at least the time series data of the stress and/or moment occurring on the blade on the second display area.

8. The state monitoring device of the wind power generating device according to claim 6, further comprising:

a first calculation processing unit that includes at least the external force estimation unit, the deformation amount estimation unit, and the evaluation unit;
a second calculation processing unit that is disposed on a remote location from the first calculation processing unit and includes at least the information output control unit; and
a network that connects the first calculation processing unit and the second calculation processing unit to be capable of communicating with each other.

9. A state monitoring system comprising:

a wind power generating device including

a rotor including a hub and at least one blade,
a nacelle accommodating a speed increasing gear and a generator, and
a tower rotatably supporting the nacelle; and

a state monitoring device that monitors a state of the wind power generating device, wherein
the state monitoring device includes

a design information database in which at least data of a structural model of a wind power generating device, a blade aerodynamic model and/or blade mass distribution and/or a tower shape is stored;
an external force estimation unit that estimates an external force applied to the wind power generating device, based on measured data from a control sensor installed in the wind power generating device and the data of the blade aerodynamic model and/or the blade mass distribution and/or the tower shape;
a deformation amount estimation unit that estimates a deformation amount of the wind power generating device, based on the external force estimated by the external force estimation unit and the structural model of the wind power generating device; and
an evaluation unit that obtains an index relating to structural integrity of the wind power generating device, based on the deformation amount estimated by the deformation amount estimation unit, and

the obtained index relating to the structural integrity is displayed on a display screen.

10. The state monitoring system according to claim 9, wherein
the state monitoring device further includes:

a first rotor torque calculation unit that calculates torque applied to a rotor of the wind power generating device, based on the external force which is applied to the wind power generating device and estimated by the external force estimation unit;

a second rotor torque calculation unit that calculates torque applied to the rotor of the wind power generating device, based on measured data which includes a power generation amount and a rotation speed of a generator and is measured by the control sensor; and

a wind condition parameter correction unit that corrects a wind condition parameter, based on difference in torques which are applied to the rotor of the wind power generating device and calculated by the first rotor torque calculation unit and the second rotor torque calculation unit, and outputs a corrected wind condition parameter to the external force estimation unit.

11. The state monitoring system according to claim 10, wherein
the wind condition parameter correction unit corrects the wind condition parameter such that the difference in the torque which is applied to the rotor of the wind power generating device and calculated by the first rotor torque calculation unit and the second rotor torque calculation unit is minimized or is within a predetermined range.

12. The state monitoring system according to claim 9, wherein
the control sensor includes a strain sensor installed in a base of a blade, and
the state monitoring system further includes an estimated deformation amount correction unit that corrects a deformation amount of the wind power generating device, estimated by the deformation amount estimation unit, based on measured data on a load applied to the base of the blade, measured by the strain sensor, and
the estimated deformation amount correction unit outputs a corrected deformation amount of the wind power generating device to the evaluation unit.

13. The state monitoring system according to claim 12, wherein
the estimated deformation amount correction unit includes
a blade base load calculation unit that calculates the load applied to the base of the blade, based on the deformation amount of the wind power generating device estimated by the deformation amount estimation unit,
a correction amount calculation unit that calculates a correction amount of the deformation amount of the wind power generating device estimated by the deformation amount estimation unit, based on a difference between the load applied to the base of the blade calculated by the blade base load calculation unit and the measured data on the load applied to the base of the blade measured by the strain sensor, and
a correction amount calculation unit that corrects the deformation amount of the wind power generating device, based on the correction amount calculated by the correction amount calculation unit and the deformation amount of the wind power generating device estimated by the deformation amount estimation unit.

14. The state monitoring system according to claim 9, wherein
the index relating to the structural integrity of the wind power generating device, obtained by the evaluation unit includes time series data of stress and/or moment occurring on the blade, and
the state monitoring system further includes an information output control unit that performs control to display the time series data of the stress and/or moment occurring on the blade on the display screen.

15. A state monitoring method of a wind power generating device, the method comprising:

estimating an external force applied to the wind power generating device, based on at least data of a structural model of the wind power generating device, a blade aerodynamic model and/or blade mass distribution and/or a tower shape and measured data from a control sensor;
estimating a deformation amount of the wind power generating device, based on the estimated external force applied to the wind power generating device and the structural model of the wind power generating device; and
obtaining an index relating to structural integrity of the wind power generating device, based on the estimated deformation amount, wherein
the obtained index relating to the structural integrity is displayed on a display screen.

**Patentansprüche**

1. Zustandsüberwachungsvorrichtung einer Windenergie-Erzeugungsvorrichtung, wobei die Zustandsüberwachungsvorrichtung umfasst:

eine Designinformationsdatenbank, in der mindestens Daten eines Strukturmodells einer Windenergie-Erzeugungsvorrichtung, eines Flügel-Aerodynamikmodells und/oder einer Flügelmassenverteilung und/oder einer Turmform gespeichert sind;

eine Einheit zum Abschätzen einer externen Kraft, die die auf die Windenergie-Erzeugungsvorrichtung einwirkende externe Kraft basierend auf Messdaten von einem in der Windenergie-Erzeugungsvorrichtung installierten Steuersensor und den Daten des Flügel-Aerodynamikmodells und/oder der Flügelmassenverteilung und/oder der Turmform schätzt;

eine Verformungsbetrag-Schätzeinheit, die einen Verformungsbetrag der Windenergie-Erzeugungsvorrichtung basierend auf der von der Einheit zur Abschätzung der externen Kraft geschätzten externen Kraft und dem Strukturmodell der Windenergie-Erzeugungsvorrichtung schätzt; und

eine Auswerteeinheit, die einen Index in Bezug auf die strukturelle Integrität der Windenergie-Erzeugungsvorrichtung basierend auf dem von der Verformungsbetrag-Schätzeinheit geschätzten Verformungsbetrag erhält, wobei

der erhaltene Index in Bezug auf die strukturelle Integrität auf einem Bildschirm angezeigt wird.

2. Zustandsüberwachungsvorrichtung einer Windenergie-Erzeugungsvorrichtung nach Anspruch 1, ferner umfassend:

eine erste Rotordrehmoment-Berechnungseinheit, die das auf einen Rotor der Windenergie-Erzeugungsvorrichtung einwirkende Drehmoment basierend auf der externen Kraft berechnet, die auf die WindenergieErzeugungsvorrichtung ausgeübt wird und von der Einheit zur Abschätzung der externen Kraft geschätzt wird;

eine zweite Rotordrehmoment-Berechnungseinheit, die das auf den Rotor der Windenergie-Erzeugungsvorrichtung einwirkende Drehmoment basierend auf Messdaten berechnet, die eine Energieerzeugungsmenge und eine Drehzahl eines Generators umfassen und von dem Steuersensor gemessen werden; und

eine Windzustandsparameter-Korrektureinheit, die einen Windzustandsparameter basierend auf der Differenz des Drehmoments korrigiert, das auf den Rotor der Windenergie-Erzeugungsvorrichtung ausgeübt wird und von der ersten Rotordrehmoment-Berechnungseinheit und der zweiten Rotordrehmoment-Berechnungseinheit berechnet wird, und die den korrigierten Windzustandsparameter an die Einheit zur Abschätzung der externen Kraft ausgibt.

3. Zustandsüberwachungsvorrichtung einer Windenergie-Erzeugungsvorrichtung nach Anspruch 2, wobei die Windzustandsparameter-Korrektureinheit den Windzustandsparameter so korrigiert, dass die Differenz des Drehmoments, das auf den Rotor der Windenergie-Erzeugungsvorrichtung einwirkt und von der ersten Rotordrehmoment-Berechnungseinheit und der zweiten Rotordrehmoment-Berechnungseinheit berechnet wird, minimiert wird oder innerhalb eines vorgegebenen Bereichs liegt.

4. Zustandsüberwachungsvorrichtung einer Windenergie-Erzeugungsvorrichtung nach Anspruch 1, wobei der Steuersensor einen Dehnungssensor enthält, der in einer Basis des Flügels installiert ist, und die Zustandsüberwachungsvorrichtung ferner eine Korrektureinheit für den geschätzten Verformungsbetrag enthält, die einen von der Verformungsbetrag-Schätzeinheit geschätzten Verformungsbetrag der Windenergie-Erzeugungsvorrichtung basierend auf Messdaten über eine auf die Basis des Flügels ausgeübte Last korrigiert, die von dem Dehnungssensor gemessen werden, und die Korrektureinheit für den geschätzten Verformungsbetrag einen korrigierten Verformungsbetrag der Windenergie-Erzeugungsvorrichtung an die Auswerteeinheit ausgibt.

5. Zustandsüberwachungsvorrichtung einer Windenergie-Erzeugungsvorrichtung nach Anspruch 4, wobei die Korrektureinheit des geschätzten Verformungsbetrags aufweist:

eine Flügelbasislast-Berechnungseinheit, die die auf die Basis des Flügels ausgeübte Last basierend auf dem Verformungsbetrag der Windenergie-Erzeugungsvorrichtung berechnet, der von der Verformungsbetrag-Schätzeinheit geschätzt wurde,

eine Korrekturbetragsberechnungseinheit, die einen Korrekturbetrag des von der Verformungsbetrag-Schätzeinheit geschätzten Verformungsbetrags der Windenergieerzeugungsvorrichtung basierend auf einer Differenz zwischen der von der Flügelbasislast-Berechnungseinheit berechneten, auf die Basis des Flügels einwirkenden Last und den von dem Dehnungssensor gemessenen Daten über die auf die Basis des Flügels einwirkenden Last berechnet, und

eine Korrekturbetragsberechnungseinheit, die den Verformungsbetrag der Windenergieerzeugungsvorrichtung basierend auf dem von der Korrekturbetragsberechnungseinheit berechneten Korrekturbetrag und dem von der Verformungsbetrag-Schätzeinheit geschätzten Verformungsbetrag der Windenergieerzeugungsvorrichtung korrigiert.

6.  Zustandsüberwachungsvorrichtung einer Windenergie-Erzeugungsvorrichtung nach Anspruch 1, wobei der von der Auswerteeinheit ermittelte Index, der sich auf die strukturelle Integrität der Windenergie-Erzeugungsvorrichtung bezieht, Zeitreihendaten von Spannungen und/oder Momenten enthält, die an dem Flügel auftreten, und die Zustandsüberwachungsvorrichtung ferner eine Informationsausgabesteuereinheit enthält, die eine Steuerung zur Anzeige der Zeitreihendaten der/des an dem Flügel auftretenden Spannung und/oder Moments auf dem Bildschirm durchführt.

7.  Zustandsüberwachungsvorrichtung einer Windenergie-Erzeugungsvorrichtung nach Anspruch 6, wobei der Bildschirm mindestens einen ersten Anzeigebereich und einen zweiten Anzeigebereich enthält, und die Informationsausgabesteuereinheit eine Verteilung der/des an dem Flügel auftretenden Spannung und/oder Moments auf dem ersten Anzeigebereich anzeigt, indem sie ein zweidimensionales Modell oder ein dreidimensionales Modell des Flügels damit überlagert, und zumindest die Zeitreihendaten der/des an dem Flügel auftretenden Spannung und/oder Moments auf dem zweiten Anzeigebereich anzeigt.

8.  Zustandsüberwachungsvorrichtung der Windenergie-Erzeugungsvorrichtung nach Anspruch 6, ferner umfassend:

    eine erste Berechnungsverarbeitungseinheit, die mindestens die Einheit zur Abschätzung der externen Kraft, die Verformungsbetrag-Schätzeinheit und die Auswerteeinheit enthält;
    eine zweite Berechnungsverarbeitungseinheit, die an einem von der ersten Berechnungsverarbeitungseinheit entfernten Ort angeordnet ist und mindestens die Informationsausgabesteuereinheit enthält; und
    ein Netzwerk, das die erste Berechnungsverarbeitungseinheit und die zweite Berechnungsverarbeitungseinheit miteinander verbindet, um miteinander kommunizieren zu können.

9.  Zustandsüberwachungssystem, umfassend:

    eine Windenergie-Erzeugungsvorrichtung mit

        einem Rotor mit einer Nabe und mindestens einem Flügel,
        einer Maschineneinheit, in der ein drehzahlerhöhendes Getriebe und ein Generator untergebracht sind, und
        einem Turm, der die Maschineneinheit drehbar trägt; und

    eine Zustandsüberwachungsvorrichtung, die einen Zustand der Windenergieerzeugungsvorrichtung überwacht, wobei
    die Zustandsüberwachungsvorrichtung aufweist:

        eine Designinformationsdatenbank, in der mindestens Daten eines Strukturmodells einer Windenergie-Erzeugungsvorrichtung, eines Flügel-Aerodynamikmodells und/oder einer Flügelmassenverteilung und/oder einer Turmform gespeichert sind;
        eine Einheit zum Abschätzen einer externen Kraft, die die auf die Windenergie-Erzeugungsvorrichtung einwirkende externe Kraft basierend auf Messdaten von einem in der Windenergie-Erzeugungsvorrichtung installierten Steuersensor und den Daten des Flügel-Aerodynamikmodells und/oder der Flügelmassenverteilung und/oder der Turmform schätzt;
        eine Verformungsbetrag-Schätzeinheit, die einen Verformungsbetrag der Windenergie-Erzeugungsvorrichtung basierend auf der von der Einheit zur Abschätzung der externen Kraft geschätzten externen Kraft und dem Strukturmodell der Windenergie-Erzeugungsvorrichtung schätzt; und
        eine Auswerteeinheit, die einen Index in Bezug auf die strukturelle Integrität der Windenergie-Erzeugungsvorrichtung basierend auf dem von der Verformungsbetrag-Schätzeinheit geschätzten Verformungsbetrag erhält, wobei

    der erhaltene Index in Bezug auf die strukturelle Integrität auf einem Bildschirm angezeigt wird.

10. Zustandsüberwachungssystem nach Anspruch 9, wobei die Zustandsüberwachungsvorrichtung ferner aufweist:

    eine erste Rotordrehmoment-Berechnungseinheit, die das auf einen Rotor der Windenergie-Erzeugungsvorrichtung einwirkende Drehmoment basierend auf der externen Kraft berechnet, die auf die Windenergie-Erzeugungsvorrichtung ausgeübt wird und von der Einheit zur Abschätzung der externen Kraft geschätzt wird;

eine zweite Rotordrehmoment-Berechnungseinheit, die das auf den Rotor der Windenergie-Erzeugungsvorrichtung einwirkende Drehmoment basierend auf Messdaten berechnet, die eine Energieerzeugungsmenge und eine Drehzahl eines Generators umfassen und von dem Steuersensor gemessen werden; und eine Windzustandsparameter-Korrektureinheit, die einen Windzustandsparameter basierend auf der Differenz des Drehmoments korrigiert, das auf den Rotor der Windenergie-Erzeugungsvorrichtung ausgeübt wird und von der ersten Rotordrehmoment-Berechnungseinheit und der zweiten Rotordrehmoment-Berechnungseinheit berechnet wird, und die den korrigierten Windzustandsparameter an die Einheit zur Abschätzung der externen Kraft ausgibt.

11. Zustandsüberwachungssystem nach Anspruch 10, wobei
die Windzustandsparameter-Korrektureinheit den Windzustandsparameter so korrigiert, dass die Differenz des Drehmoments, das auf den Rotor der Windenergie-Erzeugungsvorrichtung einwirkt und von der ersten Rotordrehmoment-Berechnungseinheit und der zweiten Rotordrehmoment-Berechnungseinheit berechnet wird, minimiert wird oder innerhalb eines vorgegebenen Bereichs liegt.

12. Zustandsüberwachungssystem nach Anspruch 9, wobei
der Steuersensor einen Dehnungssensor enthält, der in einer Basis des Flügels installiert ist, und
die Zustandsüberwachungsvorrichtung ferner eine Korrektureinheit für den geschätzten Verformungsbetrag enthält, die einen von der Verformungsbetrag-Schätzeinheit geschätzten Verformungsbetrag der Windenergie-Erzeugungsvorrichtung basierend auf Messdaten über eine auf die Basis des Flügels ausgeübte Last korrigiert, die von dem Dehnungssensor gemessen werden, und
die Korrektureinheit für den geschätzten Verformungsbetrag einen korrigierten Verformungsbetrag der Windenergie-Erzeugungsvorrichtung an die Auswerteeinheit ausgibt.

13. Zustandsüberwachungssystem nach Anspruch 12, wobei die Korrektureinheit des geschätzten Verformungsbetrags aufweist:

eine Flügelbasislast-Berechnungseinheit, die die auf die Basis des Flügels ausgeübte Last basierend auf dem Verformungsbetrag der Windenergie-Erzeugungsvorrichtung berechnet, der von der Verformungsbetrag-Schätzeinheit geschätzt wurde,
eine Korrekturbetragsberechnungseinheit, die einen Korrekturbetrag des von der Verformungsbetrag-Schätzeinheit geschätzten Verformungsbetrags der Windenergieerzeugungsvorrichtung basierend auf einer Differenz zwischen der von der Flügelbasislast-Berechnungseinheit berechneten, auf die Basis des Flügels einwirkenden Last und den von dem Dehnungssensor gemessenen Daten über die auf die Basis des Flügels einwirkenden Last berechnet, und
eine Korrekturbetragsberechnungseinheit, die den Verformungsbetrag der Windenergieerzeugungsvorrichtung basierend auf dem von der Korrekturbetragsberechnungseinheit berechneten Korrekturbetrag und dem von der Verformungsbetrag-Schätzeinheit geschätzten Verformungsbetrag der Windenergieerzeugungsvorrichtung korrigiert.

14. Zustandsüberwachungssystem nach Anspruch 9, wobei
der von der Auswerteeinheit ermittelte Index, der sich auf die strukturelle Integrität der Windenergie-Erzeugungsvorrichtung bezieht, Zeitreihendaten von Spannungen und/oder Momenten enthält, die an dem Flügel auftreten, und
das Zustandsüberwachungssystem ferner eine Informationsausgabesteuereinheit enthält, die eine Steuerung zur Anzeige der Zeitreihendaten der/des an dem Flügel auftretenden Spannung und/oder Moments auf dem Bildschirm durchführt.

15. Zustandsüberwachungsverfahren einer Windenergie-Erzeugungsvorrichtung, wobei in dem Verfahren:

eine externe Kraft, die auf die Windenergie-Erzeugungsvorrichtung einwirkt, basierend auf mindestens Daten eines Strukturmodells der Windenergie-Erzeugungsvorrichtung, eines Flügel-Aerodynamikmodells und/oder einer Flügelmassenverteilung und/oder einer Turmform und gemessenen Daten von einem Steuersensor geschätzt wird;
ein Verformungsbetrag der Windenergie-Erzeugungsvorrichtung basierend auf der geschätzten externen Kraft, die auf die Windenergie-Erzeugungsvorrichtung einwirkt, und dem Strukturmodell der Windenergie-Erzeugungsvorrichtung geschätzt wird; und
ein Index, der sich auf die strukturelle Integrität der Windenergie-Erzeugungsvorrichtung bezieht, basierend auf dem geschätzten Verformungsbetrag erhalten wird, wobei

der erhaltene Index in Bezug auf die strukturelle Integrität auf einem Bildschirm angezeigt wird.

**Revendications**

1. Dispositif de surveillance d'état d'un dispositif de génération d'énergie éolienne, le dispositif de surveillance d'état comprenant :

   une base de données d'informations de conception dans laquelle au moins des données d'un modèle structurel d'un dispositif de génération d'énergie éolienne, d'un modèle aérodynamique de pale et/ou de distribution de masse de pale et/ou d'une forme de tour sont stockées ;
   une unité d'estimation de force externe qui estime une force externe appliquée au dispositif de génération d'énergie éolienne, sur la base de données mesurées provenant d'un capteur de commande installé dans le dispositif de génération d'énergie éolienne et des données du modèle aérodynamique de pale et/ou de distribution de masse de pale et/ou de la forme de tour ;
   une unité d'estimation de quantité de déformation qui estime une quantité de déformation du dispositif de génération d'énergie éolienne, sur la base de la force externe estimée par l'unité d'estimation de force externe et du modèle structurel du dispositif de génération d'énergie éolienne ; et
   une unité d'évaluation qui obtient un indice se rapportant à une intégrité structurelle du dispositif de génération d'énergie éolienne, sur la base de la quantité de déformation estimée par l'unité d'estimation de quantité de déformation, dans lequel
   l'indice obtenu se rapportant à l'intégrité structurelle est affiché sur un écran d'affichage.

2. Dispositif de surveillance d'état d'un dispositif de génération d'énergie éolienne selon la revendication 1, comprenant en outre :

   une première unité de calcul de couple de rotor qui calcule un couple appliqué à un rotor du dispositif de génération d'énergie éolienne, sur la base de la force externe qui est appliquée au dispositif de génération d'énergie éolienne et estimée par l'unité d'estimation de force externe ;
   une deuxième unité de calcul de couple de rotor qui calcule le couple appliqué à un rotor du dispositif de génération d'énergie éolienne, sur la base de données mesurées qui incluent une quantité de génération d'énergie et une vitesse de rotation d'un générateur et sont mesurées par le capteur de commande ; et
   une unité de correction de paramètre de condition de vent qui corrige un paramètre de condition de vent, sur la base d'une différence de couple qui est appliqué au rotor du dispositif de génération d'énergie éolienne et calculé par la première unité de calcul de couple de rotor et la deuxième unité de calcul de couple de rotor, et délivre en sortie le paramètre de condition de vent corrigé pour l'unité d'estimation de force externe.

3. Dispositif de surveillance d'état d'un dispositif de génération d'énergie éolienne selon la revendication 2, dans lequel l'unité de correction de paramètre de condition de vent corrige le paramètre de condition de vent de telle façon que la différence du couple qui est appliqué au rotor du dispositif de génération d'énergie éolienne et calculé par la première unité de calcul de couple de rotor et la deuxième unité de calcul de couple de rotor est minimisée ou est à l'intérieur d'une plage prédéterminée.

4. Dispositif de surveillance d'état d'un dispositif de génération d'énergie éolienne selon la revendication 1, dans lequel le capteur de commande inclut un capteur de déformation installé dans une base de la pale, et le dispositif de surveillance d'état inclut en outre une unité de correction de quantité de déformation estimée qui corrige une quantité de déformation du dispositif de génération d'énergie éolienne, estimée par l'unité d'estimation de quantité de déformation, sur la base de données mesurées sur une charge appliquée à la base de la pale, mesurée par le capteur de déformation, et l'unité de correction de quantité de déformation estimée délivre en sortie une quantité de déformation corrigée du dispositif de génération d'énergie éolienne pour l'unité d'évaluation.

5. Dispositif de surveillance d'état d'un dispositif de génération d'énergie éolienne selon la revendication 4, dans lequel l'unité de correction de quantité de déformation estimée inclut une unité de calcul de charge de base de pale qui calcule la charge appliquée à la base de la pale, sur la base de la quantité de déformation du dispositif de génération d'énergie éolienne estimée par l'unité d'estimation de quantité de déformation, une unité de calcul de quantité de correction qui calcule une quantité de correction de la quantité de déformation du dispositif de génération d'énergie éolienne estimée par l'unité d'estimation de quantité de déformation, sur la base d'une différence entre la charge appliquée à la base de la pale calculée par l'unité de calcul de charge de base de pale et les données mesurées sur la charge appliquée à la base de la pale mesurées par le capteur de déformation, et

une unité de calcul de quantité de correction qui corrige la quantité de déformation du dispositif de génération d'énergie éolienne, sur la base de la quantité de correction calculée par l'unité de calcul de quantité de correction et de la quantité de déformation du dispositif de génération d'énergie éolienne estimée par l'unité d'estimation de quantité de déformation.

6. Dispositif de surveillance d'état d'un dispositif de génération d'énergie éolienne selon la revendication 4, dans lequel l'indice se rapportant à l'intégrité structurelle du dispositif de génération d'énergie éolienne, obtenu par l'unité d'évaluation, inclut des données chronologiques de contrainte et/ou de moment survenant sur la pale, et le dispositif de surveillance d'état inclut en outre une unité de commande de délivrance en sortie d'informations qui exécute une commande pour afficher les données chronologiques de contrainte et/ou de moment survenant sur la pale sur l'écran d'affichage.

7. Dispositif de surveillance d'état d'un dispositif de génération d'énergie éolienne selon la revendication 6, dans lequel l'écran d'affichage inclut au moins une première zone d'affichage et une deuxième zone d'affichage, et l'unité de commande de délivrance en sortie d'informations affiche une distribution de la contrainte et/ou du moment survenant sur la pale sur la première zone d'affichage en superposant un modèle bidimensionnel ou un modèle tridimensionnel de pale sur celle-ci, et affiche au moins les données chronologiques de contrainte et/ou de moment survenant sur la pale sur la deuxième zone d'affichage.

8. Dispositif de surveillance d'état d'un dispositif de génération d'énergie éolienne selon la revendication 6, comprenant en outre :

une première unité de traitement de calcul qui inclut au moins l'unité d'estimation de force externe, l'unité d'estimation de quantité de déformation, et l'unité d'évaluation ;
une deuxième unité de traitement de calcul qui est disposée en un emplacement distant de la première unité de traitement de calcul et inclut au moins l'unité de commande de délivrance en sortie d'informations ; et
un réseau qui connecte la première unité de traitement de calcul et la deuxième unité de traitement de calcul pour qu'elles soient aptes à communiquer l'une avec l'autre.

9. Système de surveillance d'état comprenant :

un dispositif de génération d'énergie éolienne incluant

un rotor incluant un moyeu et au moins une pale,
une nacelle recevant un engrenage d'augmentation de vitesse et un générateur, et
une tour supportant en rotation la nacelle ; et

un dispositif de surveillance d'état qui surveille un état du dispositif de génération d'énergie éolienne, dans lequel le dispositif de surveillance d'état inclut

une base de données d'informations de conception dans laquelle au moins des données d'un modèle structurel d'un dispositif de génération d'énergie éolienne, d'un modèle aérodynamique de pale et/ou de distribution de masse de pale et/ou d'une forme de tour sont stockées ;
une unité d'estimation de force externe qui estime une force externe appliquée au dispositif de génération d'énergie éolienne, sur la base de données mesurées provenant d'un capteur de commande installé dans le dispositif de génération d'énergie éolienne et des données du modèle aérodynamique de pale et/ou de distribution de masse de pale et/ou de la forme de tour ;
une unité d'estimation de quantité de déformation qui estime une quantité de déformation du dispositif de génération d'énergie éolienne, sur la base de la force externe estimée par l'unité d'estimation de force externe et du modèle structurel du dispositif de génération d'énergie éolienne ; et
une unité d'évaluation qui obtient un indice se rapportant à une intégrité structurelle du dispositif de génération d'énergie éolienne, sur la base de la quantité de déformation estimée par l'unité d'estimation de quantité de déformation, et

l'indice obtenu se rapportant à l'intégrité structurelle est affiché sur un écran d'affichage.

**10.** Système de surveillance d'état selon la revendication 9, dans lequel
le dispositif de surveillance d'état inclut en outre :

une première unité de calcul de couple de rotor qui calcule un couple appliqué à un rotor du dispositif de génération d'énergie éolienne, sur la base de la force externe qui est appliquée au dispositif de génération d'énergie éolienne et estimée par l'unité d'estimation de force externe ;
une deuxième unité de calcul de couple de rotor qui calcule le couple appliqué à un rotor du dispositif de génération d'énergie éolienne, sur la base de données mesurées qui incluent une quantité de génération d'énergie et une vitesse de rotation d'un générateur et sont mesurées par le capteur de commande ; et
une unité de correction de paramètre de condition de vent qui corrige un paramètre de condition de vent, sur la base d'une différence de couples qui sont appliqués au rotor du dispositif de génération d'énergie éolienne et calculés par la première unité de calcul de couple de rotor et la deuxième unité de calcul de couple de rotor, et délivre en sortie le paramètre de condition de vent corrigé pour l'unité d'estimation de force externe.

**11.** Système de surveillance d'état selon la revendication 10, dans lequel
l'unité de correction de paramètre de condition de vent corrige le paramètre de condition de vent de telle façon que la différence du couple qui est appliqué au rotor du dispositif de génération d'énergie éolienne et calculé par la première unité de calcul de couple de rotor et la deuxième unité de calcul de couple de rotor est minimisée ou est à l'intérieur d'une plage prédéterminée.

**12.** Système de surveillance d'état selon la revendication 10, dans lequel
le capteur de commande inclut un capteur de déformation installé dans une base d'une pale, et
le système de surveillance d'état inclut en outre une unité de correction de quantité de déformation estimée qui corrige une quantité de déformation du dispositif de génération d'énergie éolienne, estimée par l'unité d'estimation de quantité de déformation, sur la base de données mesurées sur une charge appliquée à la base de la pale, mesurée par le capteur de déformation, et
l'unité de correction de quantité de déformation estimée délivre en sortie une quantité de déformation corrigée du dispositif de génération d'énergie éolienne pour l'unité d'évaluation.

**13.** Système de surveillance d'état selon la revendication 12, dans lequel
l'unité de correction de quantité de déformation estimée inclut
une unité de calcul de charge de base de pale qui calcule la charge appliquée à la base de la pale, sur la base de la quantité de déformation du dispositif de génération d'énergie éolienne estimée par l'unité d'estimation de quantité de déformation,
une unité de calcul de quantité de correction qui calcule une quantité de correction de la quantité de déformation du dispositif de génération d'énergie éolienne estimée par l'unité d'estimation de quantité de déformation, sur la base d'une différence entre la charge appliquée à la base de la pale calculée par l'unité de calcul de charge de base de pale et les données mesurées sur la charge appliquée à la base de la pale mesurées par le capteur de déformation, et
une unité de calcul de quantité de correction qui corrige la quantité de déformation du dispositif de génération d'énergie éolienne, sur la base de la quantité de correction calculée par l'unité de calcul de quantité de correction et de la quantité de déformation du dispositif de génération d'énergie éolienne estimée par l'unité d'estimation de quantité de déformation.

**14.** Système de surveillance d'état selon la revendication 9, dans lequel
l'indice se rapportant à l'intégrité structurelle du dispositif de génération d'énergie éolienne, obtenu par l'unité d'évaluation, inclut des données chronologiques de contrainte et/ou de moment survenant sur la pale, et
le système de surveillance d'état inclut en outre une unité de commande de délivrance en sortie d'informations qui exécute une commande pour afficher les données chronologiques de contrainte et/ou de moment survenant sur la pale sur l'écran d'affichage.

**15.** Procédé de surveillance d'état d'un dispositif de génération d'énergie éolienne, le procédé comprenant :

l'estimation d'une force externe appliquée au dispositif de génération d'énergie éolienne, sur la base d'au moins des données d'un modèle structurel du dispositif de génération d'énergie éolienne, d'un modèle aérodynamique de pale et/ou de distribution de masse de pale et/ou d'une forme de tour et de données mesurées provenant d'un capteur de commande ;

l'estimation d'une quantité de déformation du dispositif de génération d'énergie éolienne, sur la base de la force externe estimée appliquée au dispositif de génération d'énergie éolienne et du modèle structurel du dispositif de génération d'énergie éolienne ; et

l'obtention d'un indice se rapportant à l'intégrité structurelle du dispositif de génération d'énergie éolienne, sur la base de la quantité de déformation estimée, dans lequel

l'indice obtenu se rapportant à l'intégrité structurelle est affiché sur un écran d'affichage.

[FIG. 1]

WIND DIRECTION

STATE MONITORING DEVICE

CALCULATION PROCESSING UNIT

EXTERNAL FORCE ESTIMATION UNIT

EVALUATION UNIT

DEFORMATION AMOUNT ESTIMATION UNIT

INFORMATION OUTPUT CONTROL UNIT

INPUT UNIT

OUTPUT UNIT

[FIG. 2]

```
┌──────────────────┐
│      SCADA       │ ─── 31
└──────────────────┘
         ┆
         ┆
```

3

```
                    ┌─────────┐ 11        ┌─────────┐ 12
                    │  INPUT  │           │ OUTPUT  │
                    │  UNIT   │           │  UNIT   │
                    └─────────┘           └─────────┘
                         │                     ▲
            19           │ 18b                 │ 18c
  18a   ┌──────────┐  ┌───────┐            ┌───────┐
┌──────┐│ MEASURED │  │ INPUT │            │OUTPUT │
│COMMU-││  VALUE   │  │  I/F  │            │  I/F  │
│NICA- ││ACQUISI-  │  └───────┘            └───────┘
│TION  ││  TION    │
│ I/F  ││  UNIT    │
└──────┘└──────────┘
   ▲         ▲          ▲                     ▲
   │         │          │                     │
═══╪═════════╪══════════╪═════════════════════╪═══════  20
   ▼         
```

| COMMUNICATION I/F | MEASURED VALUE ACQUISITION UNIT | INPUT UNIT | OUTPUT UNIT |

18a — COMMUNICATION I/F
19 — MEASURED VALUE ACQUISITION UNIT
11 — INPUT UNIT
12 — OUTPUT UNIT
18b — INPUT I/F
18c — OUTPUT I/F
20

17

DESIGN INFORMATION DATABASE

BLADE AERODYNAMIC MODEL

BLADE MASS DISTRIBUTION

TOWER SHAPE

STRUCTURAL MODEL OF WIND POWER GENERATING DEVICE

| EXTERNAL FORCE ESTIMATION UNIT | DEFORMATION AMOUNT ESTIMATION UNIT | EVALUATION UNIT | INFORMATION OUTPUT CONTROL UNIT |

13      14      15      16

CALCULATION PROCESSING UNIT

10

STATE MONITORING DEVICE

[FIG. 3]

· BLADE AERODYNAMIC MODEL
· BLADE MASS DISTRIBUTION
· TOWER SHAPE

STRUCTURAL MODEL
OF WIND POWER
GENERATING DEVICE

CONTROL
SENSOR DATA → EXTERNAL FORCE
ESTIMATION UNIT → DEFORMATION
AMOUNT
ESTIMATION UNIT → EVALUATION UNIT → INFORMATION
OUTPUT
CONTROL UNIT

13    EXTERNAL FORCE    14    DEFORMATION    15    STRUCTURAL    16
      ESTIMATION VALUE         AMOUNT                INTEGRITY
                               ESTIMATION VALUE      EVALUATION

[FIG. 4]

CONTOUR DISPLAY | MOMENT ▽

MOMENT OF BASE OF BLADE 1
TIME

DEGREE OF DAMAGE
COMPONENT A
COMPONENT B
COMPONENT C
TIME

MOMENT OF BASE OF BLADE 1
WIND VELOCITY

GRAPH ADDITION

[FIG. 5]

WIND
DIRECTION

24
2
1

22  27  4
4
23
25
28
29  4  26  4

21

30
31

3a

STATE MONITORING DEVICE

CALCULATION PROCESSING UNIT  10a

13  EXTERNAL FORCE ESTIMATION UNIT

15  EVALUATION UNIT

11  INPUT UNIT

14  DEFORMATION AMOUNT ESTIMATION UNIT

16  INFORMATION OUTPUT CONTROL UNIT

12  OUTPUT UNIT

41  FIRST ROTOR TORQUE CALCULATION UNIT

42  SECOND ROTOR TORQUE CALCULATION UNIT

43  WIND CONDITION PARAMETER CORRECTION UNIT

[FIG. 6]

[FIG. 7]

CONTROL SENSOR DATA → EXTERNAL FORCE ESTIMATION UNIT (13)

EXTERNAL FORCE ESTIMATION VALUE

DEFORMATION AMOUNT ESTIMATION UNIT (14)

EVALUATION UNIT (15)

INFORMATION OUTPUT CONTROL UNIT (16)

EXTERNAL FORCE ESTIMATION VALUE

FIRST ROTOR TORQUE CALCULATION UNIT (41)

CONTROL SENSOR DATA → SECOND ROTOR TORQUE CALCULATION UNIT (42)

WIND CONDITION PARAMETER CORRECTION UNIT (43)

WIND CONDITION PARAMETER

DEFORMATION AMOUNT ESTIMATION VALUE

RELIABILITY EVALUATION RESULT

[FIG. 8]

```
                    ┌─────────┐
                    │  Start  │
                    └────┬────┘
                         │
  ═══════════════════════╪════════════════════════════════════════
                         │
  S11 ┌──────────────┐   │        ┌──────────────┐
      │  ESTIMATE    │   │        │CALCULATE     │  S13
      │EXTERNAL FORCE│   │        │SECOND ROTOR  │
      └──────┬───────┘   │        │   TORQUE     │     ┌──────────────┐
             │           │        └──────┬───────┘     │ CORRECT WIND │ S15
  S12 ┌──────┴───────┐   │               │             │  CONDITION   │
      │CALCULATE     │   │               │             │  PARAMETER   │
      │FIRST ROTOR   │   │               │             └──────────────┘
      │   TORQUE     │   │               │
      └──────┬───────┘   │               │
  ════════════╪══════════╪═══════════════╪═══════════════════
             │
                    S14  ◇ IS CONVERGENCE      NO
                         CONDITION SATISFIED?
                              │ YES
                    ┌─────────┴─────────┐
                    │    ESTIMATE       │ S16
                    │DEFORMATION AMOUNT │
                    └─────────┬─────────┘
                    ┌─────────┴─────────┐
                    │    EVALUATE       │ S17
                    │STRUCTURAL INTEGRITY│
                    └─────────┬─────────┘
                    ┌─────────┴─────────┐
                    │DISPLAY INFORMATION│ S18
                    └─────────┬─────────┘
                         ┌────┴────┐
                         │   End   │
                         └─────────┘
```

[FIG. 9]

[FIG. 10]

ISOGRAM OF WIND VELOCITY

WIND DIRECTION

[FIG. 11]

WIND
DIRECTION

24
2
22 27 4
4
23
28
25
29 4
26 4

21

30
31

3b

STATE MONITORING DEVICE

10b

CALCULATION PROCESSING UNIT

13
EXTERNAL FORCE
ESTIMATION UNIT

15
EVALUATION
UNIT

11
INPUT UNIT

DEFORMATION
AMOUNT
ESTIMATION UNIT

INFORMATION
OUTPUT
CONTROL UNIT

OUTPUT UNIT
12

14
16

44
ESTIMATED
DEFORMATION
AMOUNT
CORRECTION UNIT

[FIG. 12]

[FIG. 13]

· BLADE AERODYNAMIC MODEL
· BLADE MASS DISTRIBUTION
· TOWER SHAPE

STRUCTURAL MODEL
OF WIND POWER
GENERATING DEVICE

CONTROL
SENSOR DATA

13

EXTERNAL FORCE
ESTIMATION UNIT

14

DEFORMATION
AMOUNT
ESTIMATION UNIT

EXTERNAL FORCE
ESTIMATION VALUE

DEFORMATION AMOUNT
ESTIMATION VALUE

15

16

CONTROL
SENSOR DATA
(LOAD OF BASE
OF BLADE)

ESTIMATED
DEFORMATION
AMOUNT
CORRECTION UNIT

EVALUATION UNIT

INFORMATION
OUTPUT
CONTROL UNIT

44

DEFORMATION AMOUNT
ESTIMATION VALUE (CORRECTED)
PARAMETER ESTIMATION VALUE

RELIABILITY
EVALUATION
RESULT

[FIG. 14]

[FIG. 15]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 201000138267 A
- US 20160010628 A
- US 20160252075 A
- JP 2015117682 A

**Non-patent literature cited in the description**

- **IZUMI USHIYAMA.** Introduction to Windmill Engineering. Mori Kita, 13 August 2013, 81-98